# EUROPÄISCHE PATENTANMELDUNG

(11) **EP 3 848 410 A1**
(43) Veröffentlichungstag der Anmeldung: **14.07.2021**
(21) Anmeldenummer: 20150881.9
(22) Anmeldetag: 09.01.2020
(51) Int. Cl.: C08K 3/013, C08K 3/014, C08K 3/105, C08K 3/11, C08K 3/16, C08K 3/22, C08K 5/00, C08K 5/053, C08K 5/098, C08K 5/13, C08K 5/17, C08K 7/06, C08K 7/14, C08K 7/20, C08L 77/06

(54) **POLYAMID-WERKSTOFFE MIT VERBESSERTEN LANGZEITGEBRAUCHSEIGENSCHAFTEN**

(71) Anmelder: L. Brüggemann GmbH & Co. KG, 74076 Heilbronn (DE)
(72) Erfinder: Bergmann, Klaus, 74076 Heilbronn (DE); Frädrich, Kristina, 74076 Heilbronn (DE)
(74) Vertreter: Grünecker Patent- und Rechtsanwälte PartG mbB

(57) **Zusammenfassung**

Die vorliegende Erfindung betrifft ein Verfahren zur Langzeitstabilisierung von Polyamiden sowie die Verwendung einer spezifischen Additivzusammensetzung zur Langzeitstabilisierung von Polyamiden.

## Beschreibung

Die vorliegende Erfindung betrifft Polyamid-Werkstoffe mit verbesserten Langzeitgebrauchseigenschaften, Verfahren zur Langzeitstabilisierung von Polyamiden sowie die Verwendung spezifischer Additivzusammensetzungen zur Langzeitstabilisierung von Polyamiden.

### Hintergrund der Erfindung

In Gegenwart von Luftsauerstoff finden bei Temperaturen über 70°C bzw. durch energiereiche Strahlung an der Polyamidoberfläche thermooxidative bzw. photooxidative Reaktionen statt. Dabei vergilbt die Oberfläche und wird zunehmend matt und rissig. Dies führt zur Versprödung des Werkstoffs und damit zur Beeinträchtigung der mechanischen Eigenschaften des Formteils. Durch die Zugabe geeigneter Stabilisatoren kann die oxidative Schädigung des Polyamids verzögert werden, so dass sich die Zeit bis zur Versprödung der Polyamidteile hinauszögern lässt.

Dabei wird üblicherweise zwischen Stabilisatoren für verschiedene Temperaturbereiche unterschieden. Typische Klassen an Stabilisatoren für Polyamide sind Kupfer-basierte Stabilisatoren, sekundäre aromatische Amine und Stabilisatoren auf Basis sterisch gehinderter Phenole. Sterisch gehinderte Phenole werden dabei meist in Kombinationen mit sekundären Antioxidantien, vor allem Phosphiten oder Phosphonaten eingesetzt. Diese Blends von sterisch gehinderten Phenolen mit Phosphiten oder Phosphonaten werden im Folgenden als phenolische Stabilisatoren bzw. als phenolische Antioxidantien bezeichnet. Die auf Kupfer basierenden Stabilisatoren umfassen typischer Weise mindestens eine Kupferverbindung und mindestens eine weitere halogenhaltige Komponente, die als Synergist bezeichnet wird. Die Kombination von Kupferverbindungen mit halogenhaltigen Synergisten wird im Folgenden als Kupferstabilisator bezeichnet.

Für Automobilanwendungen im Motorraum werden Gehäuse für Steuerungen, Steckverbinder und Sensoren in der Regel aus Polyamid-Werkstoffen hergestellt, da Polyamide die dort geforderten Randbedingungen besonders gut überstehen können. Eine wichtige Rolle spielen dabei die hohen Umgebungstemperaturen, denen die Baugruppen ausgesetzt sind. Die zunehmende Miniaturisierung und die immer dichtere Packung von Komponenten tragen in diesem Zusammenhang zu einem fortschreitenden Anstieg der Temperaturanforderungen bei.

In den letzten Jahren wurden die Hersteller verstärkt mit Korrosionsproblemen, v.a. Elektrokorrosion konfrontiert, die entsprechende Ausfälle nach sich zogen. Analytische Untersuchungen an korrodierten Kontakten zeigten, dass lodide und Bromide, die als Bestandteile der Kupferbasierten Stabilisatoren in den verwendeten Polyamid-Werkstoffen identifiziert wurden, wesentlich am Korrosionsgeschehen beteiligt waren.

Um Ausfälle sicher zu verhindern, kommt in zunehmendem Maße die Forderung nach Kupferfreien und damit auch Halogenfreien Polyamid-Werkstoffen auf. Im Bereich sensibler Autoelektronik hat sich die Forderung nach Werkstoffen mit besonders niedrigen Kupfer- und Halogengehalten bereits weitgehend durchgesetzt. Gleichzeitig sollen die Polyamid-Werkstoffe jedoch in vielen Anwendungen eine Stabilisierung aufweisen, bei der die Zugfestigkeit bei Hitzebelastung von 150°C erst nach einer Dauer von mindestens 2.000 Stunden, bzw. je nach Anwendung sogar erst nach mindestens 3.000 Stunden, auf 50% abfällt. Diese kombinierten Forderungen (Kupferfrei und zudem langer Erhalt der mechanischen Kennzahlen bei hohen Temperaturen) sind mit den üblichen Stabilisierungsmöglichkeiten für aliphatische Polyamide (ohne den Einsatz von Kupferstabilisatoren) nicht bzw. nur sehr schwer erreichbar. Daher müssen Hersteller aktuell auf teure Spezialthermoplaste wie Polyphenylensulfid und teilaromatische Polyamide zurückgreifen und suchen daher nach neuen Lösungen für im wesentlichen aliphatische Polyamid-Werkstoffe für Elektroanwendungen, die bei hohen Temperaturen eine erhöhte Leistungsfähigkeit aufweisen und ohne den Zusatz von Kupfer- und Halogenverbindungen für die Stabilisierung auskommen.

Im Stand der Technik gibt es dazu bereits Systeme zur Stabilisierung von Polymeren gegen thermooxidative Schädigung und dem daraus resultierenden molekularen Abbau, die auf Kupfer enthaltende und halogenhaltige Komponenten weitgehend verzichten. Die Zugabe von Polyalkoholen (Polyolen) oder alternativ von Eisenverbindungen zu Polyamiden wurde als eine Möglichkeit identifiziert, um Polyamide für Temperaturen im Bereich > 200°C sowie im Bereich von 180°C bis 200°C einsatzfähig zu machen. Bei darunter liegenden Temperaturen (unter 200°C und insbesondere unter 180°C) ist die Wirkung der Polyole oder der Eisenverbindungen jedoch nur gering ausgeprägt. Bei diesen Stabilisatoren wird postuliert, dass sie in Polyamiden nicht wie klassische Antioxidantien wirken, sondern dass sie bei erhöhter Temperatur in Anwesenheit von Sauerstoff eine Schutzschicht ausbilden, die als Barriere ("Patina") nicht bzw. wenig durchlässig ist für Sauerstoff und damit eine weitergehende Oxidation der darunterliegenden Polyamidbereiche unterbindet.

Da es für die Effektivität der Polyole oder Eisenverbindungen erforderlich ist, dass eine solche Barriereschicht ausgebildet wird, ist ein Versiegelungsschritt (Temperschritt) bei hohen Temperaturen zwingend erforderlich, auch wenn die tatsächlichen Temperaturanforderungen darunter liegen. Dieses Konzept wurde als "Schutzschild" ("Shielding") oder Barriere-Technologie in einer Reihe von Veröffentlichungen dargestellt als Lösung für sehr hohe Temperaturanforderungen vor allem in Anwendungen rund um den Motor und im Antriebsstrang (siehe: "Superior resistance to thermo-oxidative and chemical degradation in polyamides and polyphthalamides", Technical Library Society of Plastic Engineers, January 2011, von S. Mok etal.; Dr. Kremers, 19.04.2016 SKZ Tagung; Dr. Gauge, AMI Performance Polyamides 2017; "Alterungsbeständigkeit maximiert" von K. Bender, Kunststoffe 3/2010, S. 66-70; Broschüre Ultramid® Endure der Firma BASF). Das bedeutet, dass eine längere Verweilzeit bei hohen Temperaturen gegeben sein muss, typischerweise bei Temperaturen von 200°C und darüber. Das Erfordernis eines "Versiegelungsschrittes" durch entsprechende Lagerung bei hohen Temperaturen schränkt allerdings die Anwendungsmöglichkeiten stark ein und ist ein wesentlicher Hinderungsgrund für einen Einsatz der Technologie bei Temperaturen, die unter diesem Hochtemperaturbereich liegen. Bei unverstärkten Polyamiden ist diese Vorgehensweise zudem nicht möglich, da unverstärkte Polyamide während eines Versiegelungsschritts bei so hohen Temperaturen weitgehend zerstört würden.

Die hier beschriebene, auf der Ausbildung einer Barriereschicht bei sehr hohen Temperaturen basierende Technologie, wird aktuell eingesetzt für verstärkte Polyamid-Werkstoffe die in der Anwendung dauerhaft sehr hohen Temperaturen (>200°C) ausgesetzt sind. Dies ist z.B. bei Turboladern der Fall, die für sehr hohe Drücke und Temperaturen im Motorraum, speziell in der Ladeluftstrecke, sorgen. Bei aufgeladenen Dieselmotoren können im Bereich zwischen Turbolader und Ladeluftkühler Temperaturen bis 240°C herrschen. In diesem Zusammenhang werden Polyamid-Bauteile verwendet, die auf Polyamidzusammensetzungen beruhen, welche "Barriere-bildende" Additive enthalten. Dies sind z.B. Ladeluftkühlerendkappen, Resonatoren und Ladeluftleitungen.

Im bisherigen Stand der Technik werden Glasfasern und Polyole enthaltende teilaromatische Polyamidzusammensetzungen beschrieben, die bei sehr hohen Temperaturen eine deutlich verbesserte Langzeitstabilität aufweisen. WO2010/014785 A1 offenbart mit Glasfasern verstärkte teilaromatische Polyamide für den Hochtemperaturbereich, die zusätzlich Polyole und sekundäre aromatische Amine oder sterisch gehinderte Amine (oder Kombinationen aus diesen beiden Substanzklassen) enthalten. Eine Lösung für unverstärkte Polyamidzusammensetzungen im Niedertemperaturbereich wurde bislang nicht dargelegt.

Eine weitere Möglichkeit zur Stabilisierung von Polyamiden im Temperaturbereich von oberhalb 180°C wird in EP2641932A1 und in EP2828322 beschrieben. Durch Zugabe von Eisensalzen, z.B. Eisenoxalat, alleine oder in Kombination mit einem weiteren Thermostabilisator wie beispielsweise einem Kupfersalzbasierten Additiv, lassen sich die Retentionszeiten im Hochtemperaturbereich deutlich verlängern. Als wesentlich wird bei diesen Ansätzen eine Hochtemperaturbehandlung zur Erzeugung einer Oberflächenbarriereschicht angesehen. Um dabei auftretende Verkohlungseffekte zu reduzieren, schlägt die EP 1 780 241 A1 den Einsatz nanoskaliger Füllstoffe vor.

EP3115407A1 betrifft thermostabilisierte Polyamid basierte Zusammensetzungen auf Basis von Eisenoxalat und Dipentaerythritol in Kombination miteinander für den Temperaturbereich über 180°C.

EP 3059283 offenbart eine Vielzahl von Polyamidzusammensetzungen mit verbesserter Wärmebeständigkeit für Elektroanwendungen, bei denen eine Substanz mit Polyolstruktur enthalten ist, die mindestens über eine Epoxygruppe oder eine Carbodiimidgruppe verfügt. Dadurch wird eine Kopplungsreaktion mit dem Polyamid ermöglicht, die für die in der EP 3059283 offenbarte Technologie wesentlich ist. Die Migrationsneigung von Polyolen in Polyamid wird minimiert durch die reaktive Kopplung an die Polyamidmatrix. Die Herstellung solcher Polyole mit einer zusätzlichen reaktiven Epoxygruppe oder Carbodiimidgruppe ist aber aufwändig und kostenintensiv und hat sich daher in der Praxis nicht durchgesetzt. Mit der Polyamidmatrix chemisch direkt gekuppelte Polyolkomponenten sind auch in der EP 2 829 576 A1 offenbart.

EP 2881439 beschreibt mit Glasfasern verstärkte Polyamidzusammensetzung mit verbesserter Wärmebeständigkeit bei hohen Temperaturen, die sowohl ein Polyol als auch ein über den MFI definiertes Copolymerisat aus Olefin mit mindestens einem Methacrylsäureester oder Acrylsäureester enthalten. In dem genannten Beispiel wird der Polyamid-Werkstoff bei 200°C gealtert.

EP 3093312A1 offenbart Polyamidzusammensetzungen mit verbesserter Wärmebeständigkeit bei hohen Temperaturen über 180°C, die neben Polyamid ein Salz der Zitronensäure, Dipentaerythritol und mindestens einen Füll- oder Verstärkungsstoff enthalten.

Eine weitere Art an Polyamidzusammensetzungen, bei denen Stabilisierung bei erhöhten Temperaturen eine besondere Herausforderung bedeutet sind die schlagzäh modifizierten Polyamide. Bei diesen besteht aufgrund des Vorliegens sowohl einer Polyamidkomponente als auch einer kautschukelastischen Polymerkomponente die besondere Herausforderung darin, eine Temperaturstabilisierung trotz der chemisch stark unterschiedlichen wesentlichen Polymerkomponenten zu erzielen. Dieses Problem ist vor allem bei Temperaturbelastungen über 140°C stark ausgeprägt.

### Aufgabe der Erfindung

Durch den immer weiter steigenden Einsatzbereich Kunststoff basierter Materialien, z.B. im Automobilbereich, werden bessere Stabilisierungskomponenten, insbesondere für Dauergebrauchstemperaturen im Bereich von 100°C bis 170°C, wie insbesondere 150°C gesucht, vor allem auch für Polyamide, insbesondere Polyamide mit aliphatischen Einheiten. Eine typische Anforderung aus der Praxis für unverstärkte Polyamide ist in diesem Zusammenhang, dass bei Hitzealterung von Polyamid-Werkstoffen bei 150°C die Halbwertszeit der Zugfestigkeit bei mindestens 2.000h, bzw. je nach Anwendung sogar erst nach mindestens 3.000 Stunden, liegt. In Kombination damit sind weitere zu erfüllende Anforderungen kein bzw. nur ein geringer Einfluss auf elektrische Eigenschaften, wie die Kriechstromfestigkeit, sowie keine erhöhte Korrosionsneigung. Diese Punkte sind für den Einsatz in der Elektro- und Elektronikindustrie sehr wichtig. Der Ausbau im Bereich Elektromobilität erhöht zusätzlich die Nachfrage nach Materialien, die die besonderen Anforderungen in diesem Bereich erfüllen. So muss auf ionische Stabilisatorsysteme weitgehend verzichtet werden, obwohl die Anforderungen im Hinblick auf thermische Stabilität weiter hoch bleiben oder sogar strenger werden. Die Stabilität von Polyamiden muss über einen langen Zeitraum gesichert werden, insbesondere mit für die Elektroanwendung relevanten Produkteigenschaften, während die thermische Stabilität bis in den Bereich höherer Temperaturen gefordert ist (Schnellentladung von Batterien etc. setzt große Wärmemengen frei). Diese mit konventionellen Systemen nicht erreichbaren (teilweise konträren) Anforderungen müssen für den Ausbau der Elektromobilität sicher erfüllt werden. Im Hinblick auf die Verbesserung der Stabilisierung von verstärkten im Wesentlichen aliphatischen Polyamiden unter Belastung bei Temperaturen im Bereich 100 bis 170°C (typischer Wert 150°C) ist eine Anforderung aus der Praxis, dass bei Hitzealterung von verstärkten Polyamid-Werkstoffen bei 150°C die Zugfestigkeit auch nach 1.000h um maximal 10% absinkt. In Kombination damit sind weitere zu erfüllende Anforderungen kein bzw. nur ein geringer Einfluss auf elektrische Eigenschaften, wie die Kriechstromfestigkeit, sowie keine erhöhte Korrosionsneigung. Diese Punkte sind für den Einsatz in der Elektro- und Elektronikindustrie sehr wichtig. Des Weiteren ist zugleich auch eine gute Verarbeitbarkeit und Fließfähigkeit der verstärkten Polyamid-Werkstoffe gefordert.

Andererseits besteht Bedarf an Systemen zur Stabilisierung von schlagzäh modifizierten Polyamiden, v.a. bei erhöhten Temperaturen über 140°C.

Daher stellt sich die vorliegende Erfindung die Aufgabe, einen Weg anzugeben, mit dem die gewünschte Stabilisierung bei den genannten Dauergebrauchstemperaturen erreicht werden kann, also insbesondere Polyamidzusammensetzungen zu ermöglichen, die eine verbesserte Langzeitstabilisierung gegen Hitze über einen breiten Bereich (auch bei hohen Temperaturen über 150°C und bis 170°C sowie im Spezialfall auch über 170°C) aufweisen, und gleichzeitig auch effizient bei Temperaturen unter 150°C stabilisiert werden hinsichtlich einer deutlichen Verlängerung der möglichen Gebrauchsdauer, bevorzugt im Hinblick auf mindestens eine Option von a) bis c), insbesondere sowohl a) und b), sowie c), optional c) und b):
a) bei gleichzeitiger Eignung für Elektroanwendungen (geringer Gehalt an ionischen Komponenten);
b) als auch im Hinblick auf Eignung sowohl für verstärkte als auch unverstärkte Polyamide;
c) ebenso wie bei schlagzäh modifizierten Polyamiden.

Dabei ist es ebenfalls wichtig, dass diese Aufgaben in einer Art und Weise gelöst werden, so dass eine problemlose Anwendung auch im industriellen Maßstab möglich ist. Dazu gehört, dass beispielsweise unerwünschte Belagsbildung, die beim Einsatz von Polyolen, aber auch von anderen Additiven im Polyamidbereich bekannt ist, soweit es geht unterdrückt wird. Derartige Belagsbildung kann einerseits auf den hergestellten Polyamidformteilen auftreten, was neben ästhetischen Beeinträchtigungen auch zur Verringerung der Stabilisierungswirkung führen kann (da die Substanzen nicht länger ihre Funktion ausüben können), andererseits kann eine Belagsbildung auch auf den bei der Produktion eingesetzten Vorrichtungen auftreten, was zu Produktionsstörungen führen kann (beispielsweise durch Verkürzung der Produktionszyklen, da die Produktion zur Reinigung der Vorrichtung gestoppt werden muss. Derartige Probleme sollen mit der technischen Lösung den hier geschilderten Aufgaben nicht oder nur in vertretbarem Umfang auftreten.

### Kurze Beschreibung der Erfindung

Diese Aufgabe wird durch den Gegenstand der Ansprüche 1 und 2 gelöst, sowie durch den Gegenstand der nebengeordneten Ansprüche. Bevorzugte Ausgestaltungen sind in den Unteransprüchen angegeben, ebenso wie in der nachfolgenden Beschreibung.

Die nachfolgende Beschreibung enthält insbesondere eine detaillierte Darstellung im Hinblick auf unverstärkte sowie verstärkte im Wesentlichen aliphatische Polyamid-Werkstoffe. Der Fachmann wird verstehen, dass diese Beschreibungen in analoger Art und Weise auch im Hinblick auf die beanspruchte und offenbarte Verwendung, sowie im Hinblick auf die beschriebenen Verfahren anwendbar und für diese gültig sind. Ebenso wird der Fachmann verstehen, dass diese Ausführungen ebenfalls für teilaromatische Polyamide als auch für schlagzäh modifizierte Polyamide gelten.

### Detaillierte Beschreibung der Erfindung

Die vorliegende Erfindung ermöglicht überraschenderweise die gewünschte Stabilisierung von Polyamiden durch den Einsatz bereits bekannter Komponenten, die aber bislang im Stand der Technik in anderen Zusammenhängen bzw. für andere Verfahren bekannt waren. Dennoch kann eine deutlich verbesserte Stabilisierung bei Dauergebrauchstemperaturen von 100°C bis 170°C, insbesondere 150°C erreicht werden, bei gleichzeitiger Eignung für Elektroanwendungen. Dabei sind die erfindungsgemäß einzusetzenden Stabilisatoren gut in Polyamiden dispergierbar, so dass eine einfache Handhabbarkeit gegeben ist. Die erfindungsgemäßen Stabilisatoren können mit konventionellen Verfahren in Polyamide eingebracht und dort verteilt werden, darüber hinaus können die Stabilisatorkomponenten einfach zur Verwendung compoundiert werden, beispielsweise durch Compoundherstellung mit einer Matrix aus üblichen Materialien, wie Wachsen oder Polymeren. Die vorliegende Erfindung ermöglicht also die Realisierung der folgenden Vorteile:
1. Verbesserung der Stabilisierung von unverstärkten und verstärkten Polyamiden gegen lang andauernde Belastung bei den genannten Temperaturen. Möglichst langes Hinauszögern eines Abbaus und damit verbundenen Herabsetzens der Gebrauchseigenschaften, insbesondere möglichst langer Erhalt der mechanischen Kennwerte.
2. Dies ist mit im Wesentlichen aliphatischen aber auch mit teilaromatischen Poylamiden realisierbar. Gleichzeitig sind die hier beschriebenen Prinzipien auch anwendbar auf Polyamide, die durch Zusatz geeigneter Komponenten (kautschukelastische Komponenten als Blendkomponente oder gepfropfte Polyamide) schlagzäh modifiziert wurden.
3. Die stabilisierten Polyamide sind insbesondere in Elektroanwendungen einsetzbar, bei denen hohe Anforderungen im Hinblick auf die Abwesenheit ionischer Komponenten (wie Kupfersalze, Halogen-haltige Alkalimetallsalze etc.) gestellt werden.
4. Die Einsatzmenge an Stabilisator bzw. Art der Stabilisatormischung kann an die gewünschte Stabilisierungszeit (Lebensdauer des Produkts) und an die spezifischen Anforderungen im Hinblick auf die Anwesenheit oder Abwesenheit an ionischen Komponenten angepasst werden. Aufgrund der sehr guten Stabilisierung durch die erfindungsgemäß wesentlichen Komponenten kann es beispielsweise möglich werden geringe Mengen an Kupferstabilisatoren einzusetzen, um eine weitere Verbesserung der Stabilisierung zu erreichen, ohne dass durch den sehr geringen Zusatz dieser Komponenten die elektrischen Eigenschaften (Kriechstromfestigkeit) zu sehr leiden. Dies lässt sich insbesondere beim Einsatz von Kupferkomplexen realisieren.
5. Durch die verbesserte Stabilisierung können ggf. Bauteile dünner ausfallen, da eine bislang als notwendig angesehene Materialstärke (aufgrund einer gewünschten Redundanz bzw. eines entsprechenden Sicherheitsbeiwertes) verringert werden kann (da die erfindungsgemäß stabilisierten Polyamide selbst bei geringeren Materialstärken länger belastbar sind).

Überraschenderweise kann eine verbesserte Stabilisierung bei Einsatz einer Polyolverbindung oder einer Eisenverbindung erreicht werden, ohne dass die im Stand der Technik als notwendig beschriebene Aktivierung durch Hochtemperaturbehandlung zur Erzeugung einer Barriereschicht eingesetzt werden muss. Die ist insbesondere vorteilhaft, da so auch sehr dünne Bauteile hergestellt werden können, bei denen die Erzeugung einer Barriereschicht (Verkohlung der Oberfläche) nicht möglich ist, da ansonsten eine nicht akzeptable Beeinträchtigung der mechanischen Kennwerte erfolgen würde.

Erfindungswesentlich ist einerseits der Einsatz einer Polyolkomponente, bevorzugt eines Polyols mit 2 oder mehr Hydroxylgruppen, bevorzugt ein Polyol mit 2 bis 12 Hydroxylgruppen und einem Molekulargewicht von 64 bis 2000 g/mol, besonders bevorzugt Pentaerythritol, Dipentaerythritol und Tripentaerythritol (und Mischungen davon), insbesondere Dipentaerythritol. In einer weiteren bevorzugten Ausführungsform ist das Polyol ein dendritisches Polymer mit terminalen OH-Gruppen. Das Molekulargewischt eines solchen dendritischen Polymers liegt bevorzugt im Bereich 1000 bis 2000 g/mol. Die Zahl der Hydroxylgruppen liegt in diesem Fall bevorzugt in einem Bereich von 6 bis 60 Hydroxylgruppen. Ein Beispiel sind hydroxyfunktionale dendritische Polyester, die durch Polymerisation eines Polyalkoholkerns mit 2,2-Dimethylol-Propionsäure entstehen und über eine gute thermische Stabilität verfügen. In einer weiteren Ausführungsform können auch Alditole und Cyclitole als Polyolverbindungen eingesetzt werden, bevorzugt sind dabei Mannitol, Erythritol und myo-Inositol.

Die zweite erfindungsgemäße Alternative ist der Einsatz einer Eisenverbindung, bevorzugt einer Eisen(II)verbindung, insbesondere Eisenoxalat.

Diese Komponenten werden erfindungsgemäß entweder mit einem hier beschriebenen Verstärkungsstoff eingesetzt oder im Fall der Verwendung einer Polyolverbindung mit einem Kupfer- und Halogenfreien Antioxidationsmittel bzw. mit einem hier beschriebenen Verstärkungsstoff und zusätzlich mit einem Kupfer- und Halogenfreien Antioxidationsmittel.

Die Einsatzmenge an Polyolkomponente liegt üblicher Weise im Bereich von 0,1 bis 7 Gew.-% (alle Angaben, auch nachfolgend, z.B. für die Eisenverbindung, bezogen auf das Gesamtcompound), bevorzugt 0,5 bis 5 Gew.-%, besonders bevorzugt 1 bis 4 Gew.-%, insbesondere 1 bis 3 Gew.-%.

Die Einsatzmenge an Eisenverbindung liegt üblicher Weise im Bereich von 0,1 bis 1 Gew.-%, insbesondere 0,2 bis 0,6 Gew.-%

Bevorzugt ist erfindungsgemäß der Einsatz einer Polyolkomponente.

Das Kupfer- und Halogenfreie Antioxidationsmittel ist bevorzugt ein sekundäres aromatisches Amin oder ein sterisch gehindertes Phenol, welches üblicherweise in Kombination mit Phosphiten eingesetzt wird (eine derartige Kombination wird nachfolgend ebenfalls als phenolisches Antioxidans bezeichnet, bzw. derartige Kombinationen sind bei der Nennung eines sterisch gehinderten Phenols als Antioxidationsmittel mit umfasst). Möglich sind auch Kombinationen von Kupfer- und Halogenfreien Antioxidationsmitteln. Bevorzugt ist jedoch der Einsatz entweder eines sekundären aromatischen Amins oder eines sterisch gehinderten Phenols (typischerweise in Kombination mit einem sekundären Antioxidans wie z.B. Phosphiten) alleine, ohne weitere Kupfer- und Halogenfreie Stabilisatoren.

Sekundäre aromatische Amine, die in der vorliegenden Erfindung eingesetzt werden können sowohl monomere als auch polymere sekundäre aromatische Amine sein. Bevorzugt liegt das Molekulargewicht dieser Komponenten bei 260 g/mol oder mehr, stärker bevorzugt bei 350 g/mol oder mehr. Sekundäre aromatische Amine sind Verbindungen, bei denen das Amin-Stickstoffatom mit zwei organischen Substituenten verbunden ist, von denen mindestens einer, bevorzugt beide aromatisch sind. Geeignete Beispiele sind 4,4'-Di(α,α-dimethylbenzyl)diphenylamin (kommerziell erhältlich beispielsweise unter dem Namen Naugard 445), Para-(paratoluensulfonylamido)diphenylamin (kommerziell erhältlich beispielsweise unter dem Namen Naugard SA), das Reaktionsprodukt von Diphenylamin mit Aceton (kommerziell erhältlich beispielsweise unter dem Namen Aminox), N,N'-di-(2-naphthyl)-p-phenylendiamin, 4,4'-bis(a-methylbenzyhydryl)diphenylamin und weitere Verbindungen, die dem Fachmann bekannt sind, beispielsweise offenbart in der EP 0 509 282 B1.

Geeignet sind aber ebenfalls aminische Stabilisatoren, bei denen sowohl ein aromatischer als auch ein aliphatischer Substituent vorhanden ist, also beispielsweise Alkyl-Aryl-substituierte Amine oder Alkyl-Aryl-substituierte Phenylendiamine. Beispiele sind p-Phenylendiamine, wie N-(1,3-Dimethylbutyl)-N'-phenyl-p-phenylendiamin, oder N-Phenyl-N'-isopropyl-p-phenylendiamin. Im Rahmen der vorliegenden Erfindung können auch Systeme auf Basis von 2,2,4-Trimethyl-1,2-dihydrochinolin (TMQ) eingesetzt werden, bevorzugt polymerisiertes TMQ. Auch möglich sind Kondensationsprodukte von Diphenylaminen, wie alkylierten Diphenylaminen oder arylierten Diphenylaminen mit Ketonen und/oder Aldehyden. Bevorzugt sind dabei Kondensationsprodukte, die auch oligomer oder polymer sein können, z.B. aus Diphenylaminen mit Aceton oder aus Diphenylaminen mit Aceton und Formaldehyd.

Als überraschend kann in diesem Zusammenhang angeführt werden, dass diese Amine bessere Ergebnisse zeigen als beispielsweise die bekannten HALS Stabilisatoren.

Die Einsatzmenge an sekundärem aromatischen Amin liegt üblicherweise im Bereich von 0,05 bis 3 Gew.-% (alle Angaben bezogen auf die Einsatzmenge an Polyamid), bevorzugt 0,1 bis 2 Gew.-%, besonders bevorzugt 0,25 bis 1,5 Gew.-%, insbesondere 0,5 bis 1,25 Gew.-%.

Geeignete sterisch gehinderte Phenole sind Verbindungen, bei denen benachbart zur phenolischen OH-Gruppe raumfüllende Substituenten vorliegen, beispielsweise tert.-Butylgruppen. Ein besonders geeignetes Beispiel an derartigen Stabilisatoren ist 2,6-di-tert-butyl-methylphenol. Selbstverständlich sind aber auch andere derartige Stabilisatoren einsetzbar, umfassend auch dimere Strukturen, also zwei phenolische Gruppen verbunden durch eine geeignete organische Einheit, wie 2,2'Methylen-bis(6-t-butyl-4-methyl-phenol) etc., und auch bifunktionale Phenole, Thio-bis-phenole, wie 4,4'Thio-bis-6(t-butyl-metacresol), multifunktionale Phenole, Polyphenole, wie beispielsweise Reaktionsprodukte aus butyliertem p-Cresol mit Dicyclobutadien.

Die Einsatzmenge an Phenolkomponente liegt üblicher Weise im Bereich von 0,01 bis 3 Gew.-% (alle Angaben bezogen auf die Einsatzmenge an Polyamid), bevorzugt 0,1 bis 2 Gew.-%, besonders bevorzugt 0,25 bis 1,5 Gew.-%, insbesondere 0,5 bis 1,25 Gew.-%.

Die erfindungsgemäß einzusetzenden Füll- und Verstärkungsstoffe können in der Form von Fasern oder Partikeln (oder beliebigen Übergangsformen) vorliegen. Es kommen organische und anorganische Füll- und Verstärkungsstoffe in Frage. Bevorzugte Beispiele sind Glasfasern, Kohlefasern, Glaskugeln, gemahlenes Glas, Kieselgur, Wollastonit, Talkum, Kaolin, Schichtsilikate, CaF₂, CaCO₃ und Aluminiumoxide. Möglich ist auch der Einsatz von nanoskaligen Materialien, insbesondere solchen, bei denen für eine Dimension der D50 Wert kleiner als 900 nm ist.

Als nanoskalige Füllstoffe eignen sich solche Stoffe, welche in jeder beliebigen Stufe der Herstellung zugegeben werden können und dabei im Nanometerbereich fein verteilbar sind. Die erfindungsgemäß einsetzbaren nanoskaligen Füllstoffe können oberflächenbehandelt sein. Es können aber auch unbehandelte Füllstoffe oder Mischungen aus unbehandelten und behandelten Füllstoffen eingesetzt werden. Die nanoskaligen Füllstoffe haben bevorzugt eine Teilchengröße von kleiner als 500 nm in mindestens einer Dimension. Die Füllstoffe sind bevorzugt Mineralien, die bereits eine Schichtstruktur aufweisen, wie Schichtsilikate und Doppelhydroxide.

Die erfindungsgemäß eingesetzten nanoskaligen Füllstoffe sind bevorzugt ausgewählt aus der Gruppe der Oxide, Oxidhydrate von Metallen oder Halbmetallen. Insbesondere sind die nanoskaligen Füllstoffe ausgewählt aus der Gruppe der Oxide und Oxidhydrate eines Elements, ausgewählt aus der Gruppe aus Bor, Aluminium, Calcium, Gallium, Indium, Silizium, Germanium, Zinn, Titan, Zirkonum, Zink, Ytrium oder Eisen.

In einer besonderen Ausführungsform der Erfindung sind die nanoskaligen Füllstoffe entweder Siliziumdioxid oder Siliziumdioxid-Hydrate. In der Polyamidformmasse liegen die nanoskaligen Füllstoffe in einer Ausführungsform als ein gleichmäßig dispergiertes, schichtförmiges Material vor. Vor dem Einarbeiten in die Matrix besitzen sie eine Schichtdicke von 0,7 bis 1,2 nm und einen Zwischenschichtabstand der Mineralschichten von bis zu 5 nm.

Erfindungsgemäß bevorzugte Mineralien, die bereits eine Schichtstruktur aufweisen, sind natürliche und synthetische Schichtsilikate und Doppelhydroxide wie Hydrotalcit. Ebenso eignen sich erfindungsgemäß Nanofüllstoffe auf Basis von Siliconen, Silica oder Silsesquioxanen.

Unter Schichtsilikaten im erfindungsgemäßen Sinne werden 1:1 sowie 2:1 Schichtsilikate verstanden. In diesen Systemen sind Schichten aus SiO₄-Tetraedern mit solchen aus M(O,OH)₆-Oktaedem in regelmäßiger Weise miteinander verknüpft. M steht dabei für Metallionen wie Al, Mg, Fe. Bei den 1: 1 -Schichtsilikaten sind dabei jeweils eine Tetraeder- und eine Oktaederschicht miteinander verbunden. Beispiele hierfür sind Kaolin- und Serpentin-Minerale.

Bei den 2:1 Schichtsilikaten sind jeweils zwei Tetraeder- mit einer Oktaederschicht kombiniert. Sind nicht alle Oktaederplätze mit Kationen der benötigten Ladung zur Kompensation der negativen Ladung der SiO₄-Tetraeder sowie der Hydroxid-Ionen besetzt, treten geladene Schichten auf. Diese negative Ladung wird durch den Einbau einwertiger Kationen wie Kalium, Natrium oder Lithium oder zweiwertiger wie Calcium in den Raum zwischen den Schichten ausgeglichen. Beispiele für 2:1-Schichtsilikate sind Talkum, Vermiculite, Illite sowie Smectite, wobei die Smectite zu denen auch der Montmorillonit gehört, sich wegen ihrer Schichtladung leicht mit Wasser quellen lassen. Weiterhin sind die Kationen leicht für Austauschprozesse zugänglich.

Die nanoskaligen Füllstoffe sind bevorzugt ausgewählt aus der Gruppe der natürlichen und synthetischen Schichtsilikate, insbesondere aus der Gruppe aus Bentonit, Smectit, Montmorillonit, Saponit, Beidellit, Nontronit, Hektorit, Stevensit, Vermiculit, Illite, Pyrosit, der Gruppe der Kaolin- und Serpentin-Minerale, Doppelhydroxide, oder solche Füllstoffe auf Basis vom Siliconen, Silica oder Silsesquioxanen sind, wobei Montmorillonit besonders bevorzugt ist.

Die Füll- und Verstärkungsstoffe können auch oberflächenbehandelt sein. Besonders bevorzugt sind Oberflächenmodifizierungen auf Basis von Aminoalkylsilanen oder Aminoalkylsiloxanen oder Aminoalkyltrialkoxysilanen.

Besonders bevorzugt ist zum einen der Einsatz faserartiger Verstärkungsstoffe, insbesondere Glasfasern (besonders bevorzugt aus E-Glas) und Kohlefasern als auch zum anderen der Einsatz von Glaskugeln als nicht-faserartiger Verstärkungsstoff. Der Einsatz von Glasfasern und von Glaskugeln ist aufgrund ihrer guten Verfügbarkeit und günstigen Preisbasis sowie vor allem aufgrund ihrer außergewöhnlich guten Wirksamkeit im Kontext der vorliegenden Erfindung besonders bevorzugt. Glaskugeln und Glasfasern können auch in Kombination eingesetzt werden. Die Glasfasern werden dabei insbesondere in Form von Kurzglasfasern verwendet zur Herstellung von Polyamidwerkstoffen für Spritzgussverarbeitung und/oder Extrusion. Falls das erfindungsgemäße Verfahren zur Herstellung von hochmoduligen Kompositen verwendet werden soll, so kommen die Glasfasern vorzugsweise als Endlosfasern und/oder als Langglasfasern zum Einsatz. Bei derartigen Kompositen ist die nachfolgend beschriebene Herstellung von Vorkonzentraten mit dem Verstärkungsstoff (Langglas- oder Enlosglasfasern) naturgemäß nicht möglich. Allerdings ist auch bei der Herstellung derartiger Komposite der Einsatz anderer Vorkonzentrate, auch mit anderen Verstärkungsstoffen, wie Kurzglasfasern, Glaskugeln oder andere Partikel förmige Verstärkungsstoffe möglich. Weiterhin können auch mehrere Faserstoffe in Kombination zur Anwendung kommen. Beim Einsatz von Glaskugeln können hohle oder gefüllte Glaskugeln verwendet werden. Insbesondere werden massive Glaskugeln, sogenannte "Microspheres" aus Borosilikatglas oder Silikatglas eingesetzt mit Durchmessern im Bereich 5 bis 250 µm.

Aus dem Stand der Technik ist bekannt (und dies hat sich auch im Rahmen der vorliegenden Erfindung bestätigt), dass es beim Einsatz von Polyolverbindungen während der Alterung bei Temperaturen im Bereich 90 bis 170°C zu einer ausgeprägten Migration der Polyolverbindungen an die Oberfläche kommen kann. Derartige Alterungsversuche sind ein Maß für das Verhalten der getesteten Werkstoffe bei Gebrauchstemperaturen, die während des Einsatzes der jeweiligen Polyamid-Formteile auftreten. Diese Migration führt zu einer starken Belagsbildung auf der Oberfläche der Polyamid-Formteile, Fasern, Monofilamente oder Folien. Diese Oberflächenbelege wirken sich negativ auf die elektrischen Eigenschaften wie z.B. den CTI Wert aus. Zudem sind sie optisch sehr unästhetisch und wirken störend auf die Haftungseigenschaften im Rahmen von Kleben, Lackieren oder anderen Oberflächenbehandlungen. Aufgrund dieser Problematik ist ein Einsatz von Polyolverbindungen bei diesen Gebrauchstemperaturen (in den Testreihen: Alterungstemperaturen) häufig nicht möglich.

Es ist also eine weitere Aufgabe der vorliegenden Erfindung, dieses Problem zu überwinden und Zusammensetzungen und daraus hergestellten Polyamid-Formteile bereitzustellen, welche unter anderem Polyolverbindungen enthalten, aber dennoch in deutlich reduziertem Maße unter Hitzealterung bei <170°C zur Bildung von Oberflächenbelegen neigen.

Dieses Problem konnte überraschenderweise dadurch gelöst werden, dass entweder dem Polyamid zusätzlich zu der Polyolverbindung eine hohe Konzentration an Glaskugeln oder/und an faserartigen Verstärkungsstoffen, bevorzugt Kohle- oder Glasfasern, besonders bevorzugt Glasfasern zugesetzt wird (was zu mit Fasern verstärkten Polyamidzusammensetzungen führt), oder dass die Polyolverbindung zunächst in einen Träger, bevorzugt polymeren Träger, eingearbeitet wird zusammen mit entweder Glaskugeln oder mit faserartigen Verstärkungsstoffen, bevorzugt Kohle- oder/und Glasfasern, besonders bevorzugt Glasfasern. Als eine besondere Ausführungsform können auch gleichzeitig Glaskugeln und Glasfasern im Vorkonzentrat eingearbeitet werden. Dieses Vorkonzentrat wird in einem ersten Schritt mit einem Träger, vorzugsweise polymeren Träger auf dem Fachmann bekanntem Wege hergestellt. Dabei werden zum Beispiel die Polyolverbindung, ein nicht kupferhaltiges Antioxidans und die Glasfasern in der Schmelze eingebracht und in dem polymeren Träger gleichmäßig verteilt. Dieses Additiv wird anschließend dem zu modifizierenden Polyamid in der Schmelze zugemischt. Dies kann auch erfolgen bei der Herstellung eines vorstehend beschriebenen hochmoduligen Komposits mit Langglasfasern oder Endlosfasern. Bei den anderen zu modifizierenden Polyamiden kann auf diesem Weg der Gehalt an Glasfasern (bzw. Kohlefasern oder Glaskugeln) sehr niedrig gehalten werden und eine zusätzliche Dosierung von Glasfasern oder Glaskugeln (zur Vermeidung des Ausblühens der Polyolverbindung) während der Compoundierung des Polyamids ist nicht mehr erforderlich. Diese Variante führt zu Polyamidzusammensetzungen, die einen derart geringen Anteil an Fasern oder Glaskugeln aufweisen, dass sie als unverstärkte Polyamidzusammensetzungen aufgefasst werden können. Hier dient der Zusatz der Fasern oder Kugeln zum Vorkonzentrat (Polyol-Masterbatch) lediglich zur Verhinderung der Migration der Polyolverbindung an die Oberfläche eines Formteils unter Gebrauchsbedingungen, die erhöhte Temperaturen umfassen.

Erfindungsgemäß werden Polyamid und Stabilisatorkomponenten entweder miteinander aufgeschmolzen und vermischt, oder durch geeignete Verfahren compoundiert (insbesondere beim Einsatz von Glasfasern oder Glaskugeln). Alternativ wird zunächst das Polyamid aufgeschmolzen und anschließend die Stabilisatorkomponenten eingemischt, beispielsweise in der Form eines Blends. In einer bevorzugten Ausführungsform werden die Stabilisatorkomponenten in Form einer Vormischung (Konzentrat oder Masterbatch) zum aufgeschmolzenen Polyamid zugegeben.

Wird ein Vorkonzentrat der Stabilisatorkomponenten verwendet, so kann dieses Vorkonzentrat in diskontinuierlich arbeitenden Mischern, die eine sehr gute, homogene Verteilung ermöglichen, hergestellt werden, beispielsweise in einem Buss-Kneter. Üblicherweise werden aber kontinuierliche Mischer verwendet, wie bevorzugt Doppelschneckenextruder oder ZSK-Extruder. Als Matrixmaterial kann dabei dasselbe Polyamid verwendet, das anschließend mit dem Vorkonzentrat vermischt wird. Es ist aber auch möglich, ein anderes Polyamid oder ein anderes Polymer oder auch ein nichtpolymeres Material zu wählen. Optional können weitere Additive während der Masterbatch-Herstellung zugegeben werden.

In einer weiteren bevorzugten Ausführungsform in Verbindung mit einer der oben oder unten genannten Ausführungsformen enthält das erfindungsgemäße Additiv weiter mindestens einen Zuschlagstoff ausgewählt aus der Gruppe bestehend aus Antioxidantien, Nukleierungsmitteln, Stabilisatoren, Schmiermitteln, Formentrennmitteln, Gleitfähigkeitsverbesserern, Füllstoffen, Färbemitteln, Flammverzögerern und -schutzmitteln, Weichmachern, Schlagzähmodifikatoren, Antistatika, Verarbeitungshilfsmitteln, sowie weiteren Polymeren, die üblicherweise mit Polyamiden compoundiert werden oder Gemischen daraus. Besonders bevorzugt enthält das Additiv zusätzlich Nukleierungsmittel und/oder Schmiermittel. Dadurch können in einem Verarbeitungsschritt sowohl das modifizierende Additiv als auch die für die gewünschte Endanwendung weiter erforderlichen Zuschlagsstoffe in das Polyamid eingeführt werden. Dies vereinfacht die Polyamidverarbeitung, da zusätzlich Einmischvorgänge und Mischstufen entfallen können.

In einer bevorzugten Ausführungsform in Verbindung mit einer der oben oder unten genannten Ausführungsformen wird das Vorkonzentrat in Form einer Mischung des/der Additivs/Additive mit einem Träger bereitgestellt. Vorzugsweise ist der Träger ein polymerer Träger der gut in das zu modifizierende Polyamid eingearbeitet werden kann und darin leicht zu dispergieren oder zu lösen ist.. Zudem ist der polymere Träger vorzugsweise bei den für Polyamide typischen Verarbeitungstemperaturen thermisch stabil, enthält oder bildet möglichst wenige flüchtige Bestandteile und verfärbt nicht während der Verarbeitung. Vorzugsweise ist der polymere Träger ausgewählt aus einem Polymer oder Copolymer aus den Monomeren Ethylen, Propylen oder andere Olefine, Methacrylsäure, Vinylacetat, Acrylsäure, Acrylsäureester, oder Methacrylsäureester. Besonders bevorzugt ist der polymere Träger ein Ethylen-Vinylacetat-Copolymer (EVA) oder ein Olefin-Acrylsäureester-Copolymer oder ein Olefin-Methacrylsäureester-Copolymer, insbesondere ein Ethylen-Methylacrylat-Copolymer (EMA), ein Ethylen-Ethylacrylat-Copolymer (EEA) oder ein Ethylen-Butylacrylat-Copolymer (EBA). Besonders bevorzugt als Träger ist ein Ethylen-Methylacrylat-Copolymer (EMA) oder ein Ethylen-Vinylacetat-Copolymer (EVA). Es hat sich überraschend gezeigt, dass durch den Einsatz eines hier beschriebenen Copolymeren als Träger für das Vorkonzentrat, die Migrationsneigung der Polyolkomponente deutlich verringert werden kann. Besonders ausgeprägt und daher im Rahmen der vorliegenden Erfindung bevorzugt, ist dieser Effekt bei Einsatz der hier beschriebenen Copolymere als Trägerkomponente für ein Polyol enthaltendes Vorkonzentrat.

In einer Ausführungsform ist der Träger ein Polyamid, wobei alle gängigen Polyamide möglich sind, bevorzugt PA6 oder PA6.6.

Als eine weitere Ausführungsform können auch polymere Trägermaterialien mit reaktiven Gruppen eingesetzt werden, wie z.B. Maleinsäureanhydrid bzw. Glicydyl Methacrylate enthaltende Copolymere mit Olefinen. Beispiele sind Ethylen-Ethylacrylat-Glycidylmethacrylat Terpolymer (E-EA-GMA), Ethylen-Butylacrylat-Glycidylmethacrylat Terpolymer (E-BA-GMA), Ethylen-Vinylacetat-Copolymer funktionalisiert mit Maleinsäureanhydrid (E-VA-MA), Styrol-Ethylen-Butylen-Styrol Copolymer funktionalisiert mit Maleinsäureanhydrid (SEBS-MA).

Es hat sich unerwartet gezeigt, dass beim Einsatz derartiger Polymere, insbesondere Copolymere aus Olefinen und entweder Vinylacetat, oder Acrylsäureestern oder Methacrylsäureestern, die Belagsbildung bei hergestellten Polyamidwerkstücken reduziert ist, was vorteilhaft ist, da einerseits ggf. störende Belege auf den Werkstücken unterdrückt werden können, andererseits auch keine Rückstände in den Formwerkzeugen bei der Herstellung der Polyamidwerkstücke auftreten, so dass lange Produktionszeiten ohne Reinigung möglich werden.

In einer weiteren Ausführungsform können auch nicht polymere Träger eingesetzt werden. Beispiele sind Gleitmittel wie primäre und sekundäre Fettsäureamidwachse, beispielsweise Ethylen-bis-stearamid (EBS), Erucamid und Stearamid, Metallseifen beispielsweise Metallstearate, Paraffinwachse, Polyolefinwachse, Fischer-Tropsch Wachse, Fettsäureester des Pentaerythritols, polare synthetische Wachse (beispielsweise oxidierte Polyolefin-Wachse oder gepfropfte Polyolefin-Wachse) oder andere Wachse, sowie andere Stoffe, die auch als Zuschlagstoffe für Polyamide bekannt sind. Bevorzugt sind EBS, Erucamid, langkettige Ester des Pentaerythrits und oxidierte Polyolefinwachse.

In einer bevorzugten Ausführungsform weist der Träger, vorzugsweise polymere Träger, idealerweise einen Schmelzpunkt auf, der niedriger ist als der Schmelzpunkt des zu verarbeitenden Polyamids. Dies ermöglicht zum einen die schonende und energiesparende Einbringung der Additive in den Träger bei der Herstellung des Vorkonzentrats und, weiterhin wird dadurch auch die Einbringung in das Polyamid vereinfacht.

Es ist aber auch möglich, die stabilisierenden Komponenten schon bei der Herstellung des Polyamids, d.h. der Monomermischung, zuzusetzen. Dadurch ist eine sehr gute Durchmischung ohne zusätzlichen Mischvorgang möglich, was Herstellungskosten und - zeiten senkt.

Die genannten Additive und/oder Zuschlagstoffe können aber auch separat im erfindungsgemäßen Verfahren eingesetzt werden, beispielsweise durch eine separate Eindosierung bei der Herstellung erfindungsgemäß stabilisierter Polyamide.

Erfindungsgemäß können alle üblichen Polyamide stabilisiert und im Rahmen der Erfindung eingesetzt werden. Polyamide sind Polymere mit wiederkehrenden Carbonamidgruppen -CO-NH- in der Hauptkette. Sie bilden sich aus
(a) Aminocarbonsäuren oder deren funktionellen Derivaten, z.B. Lactamen; oder aus
(b) Diaminen und Dicarbonsäuren oder deren funktionellen Derivaten.
Durch Variationen der Monomerbausteine sind Polyamide in großer Vielfalt zugänglich. Die wichtigsten Vertreter sind aliphatische Polyamide, beispielsweise Polyamid 6 aus ε-Caprolactam, Polyamid 6.6 aus Hexamethylendiamin und Adipinsäure, Polyamid 6.10 und 6.12, Polyamid 10.10, Polyamid 12.12, Polyamid 11, Polyamid 12, PACM-12 sowie Polyamid 6-3-T, PA4.6 und teilaromatische Polyamide (Polyphthalamide PPA), wie z.B. PA6T, PA6T/6I oder PA6T/6.6. Im Rahmen der vorliegenden Erfindung können auch schlagzäh modifizierte Polyamide eingesetzt werden, wobei dies sowohl gepfropfte Polyamide als auch Mischungen von Polyamiden mit modifizierenden Komponenten (wie kautschukelastische Polymere) umfasst.

Im Rahmen der vorliegenden Erfindung einzusetzende schlagzäh modifizierte Polyamide sind insbesondere Polyamide, compoundiert mit Schlagzähmodifikatoren, Elastomeren und/oder Kautschuken. Beispiele derartiger Komponenten sind EPM- oder EPDM-Kautschuke, elastomere Copolymerisate aus Ethylen und Acrylmonomeren, ABS-, ASA-, NR-, SES-, SEBS- oder SIS-Elastomere, Butadien basierte Elastomere, Isopren basierte Elastomere, Silikonkautschuke sowie Mischungen daraus. Diese elastomeren Schlagzähmodifikatoren liegen in den dem Fachmann bekannten Mischungsverhältnissen mit dem Polyamid vor.

Erfindungsgemäß können aber auch alle weiteren Polyamide stabilisiert werden, beispielsweise weitere Copolyamide oder Copolymere von Polyamiden mit anderen Segmenten, beispielsweise mit Polyestern. Es ist auch möglich, Blends verschiedener Polyamide und Blends aus Polyamiden mit anderen Polymeren zu stabilisieren. Besonders bevorzugt sind dabei Polyamid 6, Polyamid 6.6 sowie Copolyamide aus Polyamid 6 und Polyamid 6.6.

Somit stellt die vorliegende Erfindung ein System zur Verfügung, das sicher Polyamide über einen breiten Temperaturbereich stabilisieren kann, wobei dieser Temperaturbereich Temperaturen von unterhalb 150°C und ebenso Temperaturen von 150°C oder mehr umfasst. Der Temperaturbereich von 150°C oder höher erstreckt sich insbesondere über Temperaturen von 160°C oder höher, einschließlich 170°C. Die vorliegende Erfindung ermöglicht es also eine Stabilisierung über den gewünschten Temperaturbereich (100°C bis 170°C) zu erreichen, wobei auf Kupferverbindungen verzichtet werden kann, ebenso wie auf Halogenverbindungen, während gleichzeitig die im Stand der Technik beschriebene Hochtemperaturbehandlung zur Erzeugung einer Barriereschicht unterbleiben kann. Stabilisierte Polyamidzusammensetzungen dieses Aspekts der vorliegenden Erfindung umfassen daher bevorzugt als Stabilisator ausschließlich die hier beschriebenen an Kupfer und Halogen freien Systeme zur Temperaturstabilisierung. Dennoch ist auch im Rahmen der vorliegenden Erfindung, in Anwendungsbereichen, die dies erlauben, der Einsatz derartiger Komponenten nicht ausgeschlossen. Also, wie insbesondere durch die nachfolgenden experimentellen Daten belegt, wird ein insgesamt verbessertes System zur Verfügung gestellt, so dass sich auch deutliche Verlängerungen der Stabilisierungszeiträume realisieren lassen.

In einer weiteren Ausführungsform können die Polyalkohole auch mit Kupferstabilisatoren, bevorzugt auf Basis von Kupferkomplexen (besonderes bevorzugt auf Basis von Kupferkomplexen in Kombination mit nichtionischen Halogenhaltigen Synergisten), kombiniert werden. Dies erlaubt zusätzlich eine verbesserte Langzeitstabilisierung auch bei Temperaturen von über 160°C. Auch in diesem Fall ist ein vorgelagerter Versiegelungsprozess zur Ausbildung einer Schutzschicht nicht erforderlich. Weiterhin erlaubt diese Kombination eine Ausgestaltung von Rezepturen mit niedrigen Kupfer- und Halogen-Gehalten im Werkstoff, so dass die elektrischen Eigenschaften von entsprechenden Werkstoffen nur geringfügig bis gar nicht negativ beeinflusst werden. Dies gilt insbesondere, wenn Kupferkomplexe und organische Halogenverbindungen eingesetzt werden, da diese die elektrischen Eigenschaften am wenigsten (nachteilig) beeinträchtigen.

Mit den erfindungsgemäß stabilisierten Polyamidzusammensetzungen auf Basis der hier beschriebenen wesentlichen Komponenten wird zudem gleichzeitig eine sehr hohe Kriechstromfestigkeit erreicht. Zusätzlich wird diese hohe Kriechstromfestigkeit auch nach Hitzealterung nicht negativ beeinträchtigt. Dies erlaubt den Einsatz auch in Bereichen, die eine hohe Kriechstromfestigkeit in Form eines CTI-Wertes (comparative tracking index) von 600 V (bei unverstärkten Polyamiden) fordern. Dies wird durch die Versuche, die nachfolgend beschrieben sind und die das Ausblühen der Polyolkomponente bewerten, nachgewiesen.

Überraschend ist im Zusammenhang mit der vorliegenden Erfindung, dass durch eine Kombination einer Polyolkomponente mit einem spezifischen Synergisten, also einem Verstärkungsstoff oder einem Halogen- und Kupferfreien Antioxidationsmittel, wie in den Ansprüchen 1 bis 9 definiert, eine unerwartete Verbesserung der Stabilisierung von Polyamiden erreicht werden kann, die sowohl die klassischen Kupferstabilisatoren übertrifft, als auch mit anderen Kombinationen nicht erreicht werden kann. Dies wird insbesondere auch in den nachfolgenden Beispielen belegt, wo herkömmliche Systeme, wie auch die im Stand der Technik beschriebenen Eisen basierten Stabilisatoren, die mit der erfindungsgemäßen Kombination zu erreichenden Effekte nicht ermöglichen.

Die erfindungsgemäß optional einzusetzenden Kupferstabilisatoren können frei gewählt werden. Typische Beispiele umfassen zwei wesentliche Komponenten, nämlich ein Gemisch von Kupferverbindungen und speziellen halogenhaltigen Verbindungen (hier auch als Synergisten bezeichnet). Die eingesetzte Kupferverbindung kann ein beliebiges Kupfersalz (Cul, CuBr, Kupferacetat, CuCN, Kupferstearat, ..) oder eine beliebige andere Kupferverbindung wie z.B. CuO, Cu₂O, Kupfercarbonat oder ein beliebiger Komplex des Kupfers sein. Der erfindungsgemäß einzusetzende Synergist ist eine halogenhaltige Komponente, wie ein halogeniertes Polymer, ein Alkali- oder Erdalkalisalz (wie Kl, KBr etc.), oder eine organische Verbindung mit Halogensubstituenten, wie halogenhaltige aromatisch oder aliphatische Phosphate.

Diese beiden Komponenten werden in typischer Weise in Mengen eingesetzt, so dass sich ein Verhältnis von Cu : Halogen von 1:1 bis 1:50 (Molverhältnis) ergibt, bevorzugt 1:4 bis 1:20, stärker bevorzugt 1:6 bis 1:15.

Die Mengen an Kupfer sowie Halogen im Polyamid werden in Abhängigkeit von der gewünschten Verwendung des Polyamids sowie von der gewünschten zusätzlichen Stabilisierung ausgewählt. Die Menge an Kupfer, die dabei verwendet wird, ist nicht beschränkt, solange die mechanischen Eigenschaften des Polyamids nicht negativ beeinträchtigt werden. Im Hinblick auf die im Rahmen der vorliegenden Erfindung im Vordergrund stehenden Bereitstellung stabilisierter Polyamide mit guten Eigenschaften im Hinblick auf Elektroanwendungen werden derartige zusätzlichen Kupferstabilisatoren aber nur in geringen Mengen optional eingesetzt, um besonders gute Stabilisation zu erreichen. Bei konventionellen Stabilisierungen werden Kupfermengen von im Bereich von 1 bis 1000 ppm Cu, bevorzugt 3 bis 200 ppm Cu, stärker bevorzugt 5 bis 150 ppm Cu verwendet. Im Rahmen der vorliegenden Erfindung werden die Einsatzmengen an Kupfer normalerweise in den unteren Bereichen liegen. Die Einsatzmengen an Synergist (jeweils bezogen auf ppm Halogen) ergeben sich damit aus den vorstehend offenbarten Verhältnissen. Die Zugabemenge für den Synergisten unterliegt keiner besonderen Beschränkung. Zugaben über 1% führen aber im Allgemeinen zu keiner Verbesserung der Stabilisatorwirkung. Die Einsatzmengen liegen typischerweise im Bereich 10 bis 10.000 ppm. Bevorzugte Mengen sind im Bereich von 30 bis 2000 ppm, stärker bevorzugt 50 bis 1500 ppm.

Erfindungsgemäß einzusetzende optionale Kupferkomplexe sind Komplexe von Kupfer mit Liganden wie Triphenylphosphine, Mercaptobenzimidazole, Glycin, Oxalate und Pyridine, Auch einsetzbar sind Chelatliganden, wie Ethylendiamintetraacetate, Acetylacetonate, Ethylendiamine, Diethylentriamine, Triethylentetraamine Phopsphinchelatliganden oder Bipyridine. Beispiele für die bevorzugten Phosphinchelatliganden sind 1,2-Bis-(dimethylphosphino)-ethan, Bis-(2-diphenylphosphinoethyl)-phenylphosphin, 1,6-(Bis-(diphenylphosphino))-hexan, 1,5-Bis-(diphenylphosphino)-pentan, Bis-(diphenylphosphino)methan, 1,2-Bis-(diphenylphosphino)ethan, 1,3-Bis-(diphenylphosphino)propan, 1,4-Bis-(diphenylphosphino)butan und 2,2'-Bis-(diphenylphosphino)-1,1'-binaphthyl.

Diese Liganden können einzeln oder in Kombination zur Komplexbildung eingesetzt werden. Die dazu nötigen Synthesen sind dem Fachmann bekannt oder in der Fachliteratur zur Komplexchemie beschrieben. Wie üblich können diese Komplexe neben den oben genannten Liganden noch typische anorganische Liganden enthalten, wie Wasser, Chlorid, Cyanoliganden usw.

Bevorzugt sind Kupferkomplexe mit den Komplexliganden Triphenylphosphine, Mercaptobenzimidazole, Acetylacetonate und Oxalate. Insbesondere bevorzugt sind Triphenylphosphine und Mercaptobenzimidazole.

Bevorzugte erfindungsgemäß eingesetzte Komplexe des Kupfers werden üblicherweise durch Reaktion von Kupfer(I)ionen mit den Phosphin- bzw. Mercaptobenzimidazolverbindungen gebildet. Beispielsweise können diese Komplexe durch Umsetzung von Triphenylphosphin mit einem in Chloroform suspendierten Kupfer(I)halogenid erhalten werden (G. Kosta, E. Reisenhofer und L. Stafani, J. Inorg. Nukl. Chem. 27 (1965) 2581). Es ist aber auch möglich, Kupfer(II)verbindungen mit Triphenylphosphin reduktiv umzusetzen, um so die Kupfer(I)additionsverbindungen zu erhalten (F.U. Jardine, L. Rule, A.G. Vohrei, J. Chem. Soc. (A) 238-241 (1970)).

Die erfindungsgemäß optional verwendeten Komplexe können aber auch durch jedes weitere geeignete Verfahren hergestellt werden. Geeignete Kupferverbindungen zur Herstellung dieser Komplexe sind die Kupfer(I)- oder Kupfer(II)salze der Halogenwasserstoffsäuren, der Cyanwasserstoffsäure oder die Kupfersalze der aliphatischen Carbonsäuren. Beispiele für geeignete Kupfersalze sind Kupfer(I)chlorid, Kupfer(I)bromid, Kupfer(I)iodid, Kupfer(I)cyanid, Kupfer(II)chlorid, Kupfer(II)acetat oder Kupfer(II)stearat.

Prinzipiell sind alle Alkyl- oder Arylphosphine geeignet. Beispiele erfindungsgemäß einsetzbarer Phosphine sind Triphenylphosphin (TPP), substituierte Triphenylphosphine, Trialkylphosphine und Diarylphosphine. Ein Beispiel eines geeigneten Trialkylphosphins ist Tris-(n-butyl)phosphin. Generell sind die Triphenylphosphinkomplexe stabiler als die Trialkylphosphinkomplexe. Triphenylphosphin ist zudem aufgrund der kommerziellen Verfügbarkeit auch in wirtschaftlicher Hinsicht bevorzugt.

Beispiele geeigneter Komplexe lassen sich durch die folgenden Formeln darstellen: [Cu(PPh₃)₃X], [Cu₂X₂(PPh₃)₃], [Cu(PPh₃)X]₄ sowie [Cu(PPh₃)₂X], wobei X ausgewählt ist aus Cl, Br, I, CN, SCN oder 2-MBI.

Erfindungsgemäß optional einsetzbare Komplexe können aber auch zusätzlich noch weitere Komplexliganden enthalten. Beispiele sind Bipyridyl (z.B. CuX (PPh₃) (bipy), wobei X Cl, Br oder I ist), Bichinolin (z.B. CuX (PPh₃) (biquin), wobei X Cl, Br oder I ist) sowie 1,10-Phenanthrolin, o-Phenylenbis(dimethylarsin), 1,2-Bis(diphenylphosphino)ethan und Terpyridyl.

Das erfindungsgemäß optional einzusetzende Kupfersalz kann irgendein beliebiges Kupfersalz sein.

Bevorzugt sind Salze des einwertigen oder zweiwertigen Kupfers mit anorganischen oder organischen Säuren.

Beispiele geeigneter Kupfersalze sind die Kupfer(I)salze, wie Cul, CuBr, CuCl oder CuCN, Kupfer(II)salze, wie CuCl₂, CuBr₂, Cul₂, Kupferacetat, Kupfersulfat, Kupferstearat, Kupferpropionat, Kupferbutyrat, Kupferlactat, Kupferbenzoat oder Kupfernitrat, sowie die Ammoniumkomplexe der oben genannten Salze.

Weiterhin können auch Verbindungen, wie Kupferacetylacetonat oder Kupfer-EDTA, verwendet werden. Es ist auch möglich, Mischungen verschiedener Kupfersalze einzusetzen. Gegebenenfalls kann darüber hinaus auch Kupferpulver eingesetzt werden.

Der erfindungsgemäß optional einzusetzende Synergist für die Kupferkomponenten ist wie vorstehend beschrieben nicht beschränkt, bevorzugt sind neben Alkalihalogeniden, insbesondere Kl und KBr, halogenierte Polymere, organische Verbindungen mit Halogenen als Substituenten, wie aromatische halogenhaltige Verbindungen, wie bromierte Polystyrole oder Poly(pentabromobenzyl)acrylate und auch halogenhaltige aromatische und aliphatische Phosphate oder Phosphonatester, wie Tris(haloaromatische)phosphate oder Phosphonatester, z.B. Tris(2,4-dibromophenyl)phosphat, Tris(2,4-dichlorophenyl)phosphat und Tris(2,4,6-tribromophenyl)phosphat.

Beispiele an halogenhaltigen aliphatischen Phosphaten sind Tris(halohydrocarbyl)-phosphate oder Phosphonatester. Bevorzugt sind Tris(bromohydrocarbyl)-phosphate (bromierte aliphatische Phosphate). Insbesondere sind bei diesen Verbindungen keine Wasserstoffatome an einem Alkyl-C-Atom gebunden, welches sich in alpha-Position zu einem mit einem Halogen verbundenen C-Atom befindet. Dadurch können keine Dehydrohalogenierungsreaktionen auftreten. Beispielverbindungen sind Tris(3-bromo-2,2 bis(bromomethyl)propyl)phosphate, Tris (dibromoneopentyl)phosphat, Tris(trichloroneopentyl)phosphate, Tris(chlorodibromoneopentyl)phosphate und Tris(bromodichloroneopentyl)phosphate. Bevorzugt sind Tris-(dibromoneopentyl)phosphat und Tris (tribromoneopentyl)phosphat.

Besonders bevorzugt sind hier die halogenierten, insbesondere bromierten Polystyrole, die am aromatischen Kern mit Brom substituiert sind.

Kritisch im Hinblick auf den Einsatz von Polyamiden ist das Thema Korrosion, vor allem Elektrokorrosion. In diesem Zusammenhang werden Halogene, insbesondere Brom und Chlor, aber auch Iod, als schädlich eingeschätzt für elektrische Bauteile aufgrund von Wechselwirkungen der Halogenid-Anionen mit intermetallischen Phasen. Daher ist eine Forderung nach Reduzierung des Halogengehalts in der Elektro- und Elektronikindustrie inzwischen weit verbreitet. Die vorliegende Erfindung verwendet halogenfreie Stabilisatoren, so dass hier keine Probleme auftreten. Selbst wenn im Rahmen der vorliegenden Erfindung halogenhaltige Stabilisatoren zum Einsatz kommen (als zusätzliche Stabilisatoren, um z.B. spezifische Eigenschaftsprofile zu erzeugen), sind die Einsatzmengen derart gering, dass auch in diesen Ausführungsformen keine Probleme im Hinblick auf Elektrokorrosion zu befürchten sind, da aufgrund der guten Wirksamkeit niedrig dosiert werden kann, so dass entsprechende Grenzwerte eingehalten werden können.

Die nachfolgenden Beispiele erläutern die Erfindung.

In allen Beispielen wurde Polyamid mit den genannten Stabilisatoren, entweder direkt oder als Vorkonzentrat in einem Träger in konventioneller Weise compoundiert und die zu testenden mechanischen und anderen Eigenschaften an Prüfkörpern evaluiert. Die Alterungsbedingungen sind jeweils angegeben.

Es wurde ein Polyamid 6.6 der Firma BASF verwendet (Ultramid A27 E).

Die Compoundierung erfolgte mit einem Doppelschneckenextruder der Firma Leistritz ZSE27MAXX - 48D.

Die Additive wurden gravimetrisch während der Compoundierung zudosiert.

Nach dem Trocknen wurden aus dem Compound auf einer Spritzgießmaschine "Demag Ergotech 60/370-120 concept" Norm-Prüfstäbe zur Bestimmung der mechanischen Kennwerte (ISO 527) und der Schlagzähigkeit (ISO 179/1eU) hergestellt.

In Wärmeumluftöfen wurden die Prüfstäbe bei den in den Beispielen genannten Temperaturen gelagert.

Die Messung von E-Modul [MPa], Zugfestigkeit [MPa] (Dehnung [%]) und Bruchspannung [MPa] (Dehnung [%]) erfolgte im Zugversuch nach ISO 527 mit einer statischen Materialprüfmaschine Zwick Z010.

Die Messung der Schlagzähigkeit erfolgte gemäß ISO 179/1eU im Schlagbiegeversuch nach Charpy mit einem Pendelschlagwerk HIT PSW 5,5J.

Verwendete chemische Verbindungen und Abkürzungen:
Irganox 1098: N,N'-hexane-1,6-diylbis(3-(3,5-di-tert.-butyl-4 hydroxyphenylpropionamid))
Irgaphos 168: Tris-(2,4-di-tert.butylphenyl)phosphit
Naugard 445: 4,4'-Bis(a,a-dimethylbenzyl)diphenylamin
Chimassorb 944: Poly[[6-[(1,1,3,3-tetramethylbutyl)amino]-1,3,5-triazine-2,4-diyl][(2,2,6,6-tetramethyl-4-piperidinyl)imino]-1,6 hexanediyl[(2,2,6,6-tetramethyl-4-piperidinyl)imino]])
Eisenoxalat wurde in Form eines 5%igen Masterbatches von Eisen-(II)-Oxalat-Dihydrat in Polyamid 6 eingesetzt.
H324: Brüggolen H324, Stabilisator auf Basis von Kupferiodid und Kaliumiodid.
H3386: Brüggolen H3386, Kupferkomplexbasierter Stabilisator mit organischem halogenhaltigem Synergisten.
Copolymer A: Ethylen-methylacrylat-copolymer
Copolymer B: Ethylen-butylacrylat-copolymer
Copolymer C: Ethylen-vinylacetat-copolymer
Copolymer D: Ethylen-acrylsäure-copolymer
Füllstoff A: kalzinierte Kieselerde
Füllstoff B: Montmorillonit
Füllstoff C: Böhmit
Füllstoff D: Glaskugeln mit einer Partikelgröße im Bereich 35 µm

### Beispiel 1

Die in der Tabelle 1 genannten Additive wurden mit PA 6.6 compoundiert und die Halbwertszeit der Zugfestigkeit bestimmt.

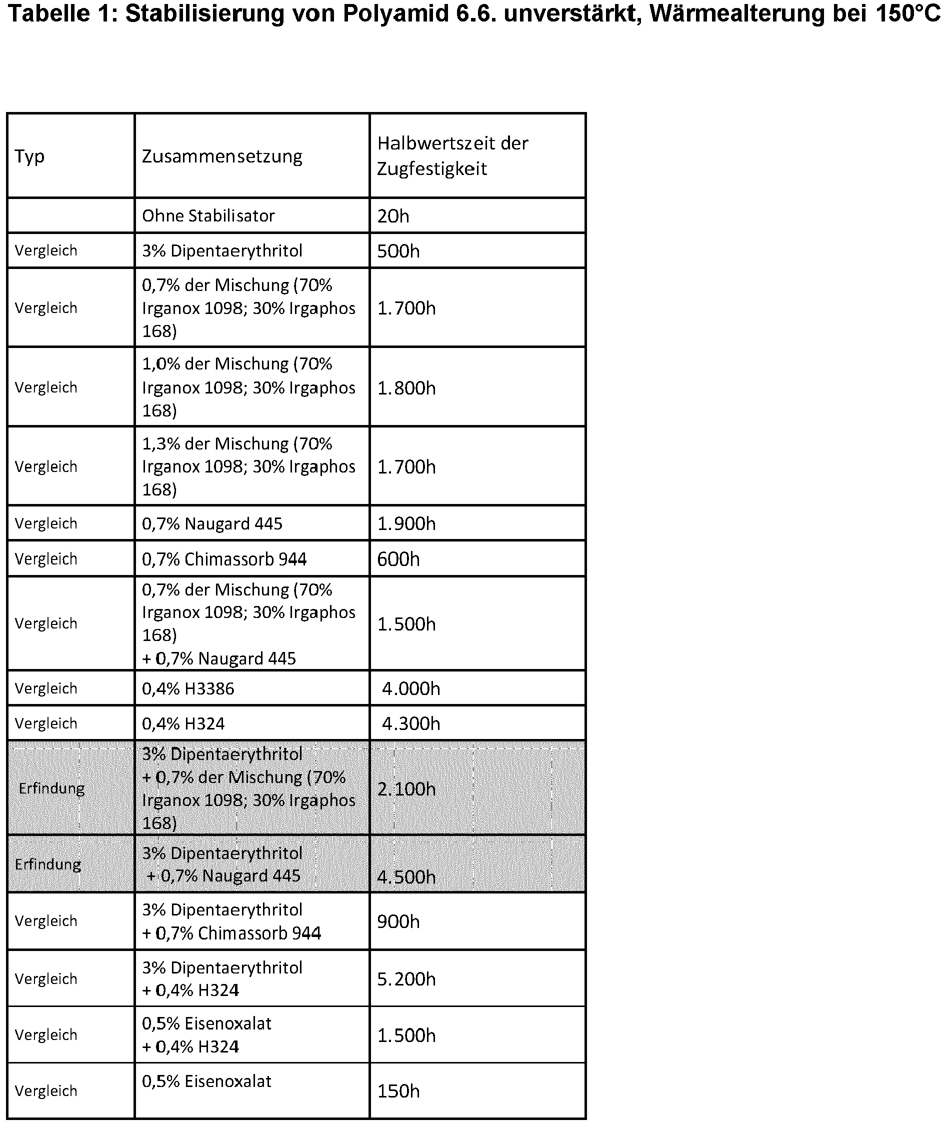

Die Vergleichsbeispiele dieser Tabelle zeigen, dass eine ausreichende (d.h. mindestens 2.000h Halbwertszeit der Zugfestigkeit) Stabilisierung von unverstärkten Polyamiden im bisherigen Stand der Technik nur mit Hilfe von Kupferbasierten Stabilisatoren (H324 und H3386) erreicht werden konnte. Die Effizienz von phenolisch oder aminisch basierten (sekundäre aromatischen Amine) Stabilisatoren alleine oder in Kombination reicht hierfür nicht aus, auch nicht bei sehr hohen Konzentrationen, die sogar kontraproduktiv sind. Die gleichzeitige Forderung nach Kupfer- und Halogenfreiheit kann mit den bislang bekannten Vergleichsvarianten nicht erfüllt werden. Erst die erfindungsgemäße Kombination von Polyalkoholen mit Antioxdiantien, die entweder phenolisch basiert sind oder auf sekundären aromatischen Amine beruhen, führt zum Erfolg, wobei die Kombination mit einem sekundären aromatischen Amin alleine die besten Ergebnisse zeigt. Polyalkohole alleine zeigen dagegen selbst bei hohen Konzentrationen nur eine sehr geringe Wirkung bei 150°C. In diesem Temperaturbereich sind auch Kombinationen von Polyol und HALS Stabilisator nicht in ausreichendem Masse geeignet.

### Beispiel 2

Die in der Tabelle 2a genannten Additive wurden mit PA 6.6 compoundiert und die Belagsbildung evaluiert. Dazu wurden die Polyamidgranulate für 68h bei 150°C in einem Wärmeumluftofen gelagert und dann die Belagsbildung visuell bewertet. Im Fall der erfindungsgemäßen Beispiele unter Verwendung der Vorkonzentrate VK1 bis VK13 wurde zunächst ein Vorkonzentrat in dem betreffenden Copolymer A, B, C bzw. D mit den hier angegebenen Zusammensetzungen hergestellt, das dann mit dem Polyamid compoundiert wurde.

**Vorkonzentrate:**

| Anteil [Gew.-%] | VK 1 | VK 2 | VK 3 | VK 4 | VK5 | VK 6 | VK 7 | VK 8 | VK 9 | VK10 | VK11 | VK12 | VK13 |
|---|---|---|---|---|---|---|---|---|---|---|---|---|---|
| Dipentaerythritol | 40 | 50 | 56 | 56 | 40 | 40 | 40 | 40 | 28 | 35 | 35 | 56 | 35 |
| Naugard 445 | 14 | | 14 | 14 | 14 | 14 | 14 | 14 | 10 | 14 | 14 | 14 | 14 |
| BRÜGGOLEN® H3386 | | 7 | | | | | | | | | | | |
| Glasfaser | | | | | | | | 10 | 30 | 10 | 12 | | |
| Copolymer A | 46 | 43 | 30 | | 31 | 36 | 36 | 36 | 32 | 36 | | | |
| Copolymer B | | | | 30 | | | | | | | | | |
| Copolymer C | | | | | | | | | | | 39 | | 39 |
| Copolymer D | | | | | | | | | | | | 30 | |
| Carbonfaser | | | | | | | 10 | | | 5 | | | |
| Füllstoff C | | | | | | 10 | | | | | | | |
| Füllstoff D | | | | | | | | | | | | | 12 |
| Polyamid 6 | | | | | 15 | | | | | | | | |

Die Vorkonzentrate wurden jeweils auf einem Doppelschneckenextruder Leistritz ZSE 27 MAXX 48D bei 100°C bis 180°C (in einem entsprechenden Temperaturprofil) mit einem Durchsatz von 10kg/h hergestellt.

**Tabelle 2a: Bewertung der Belagsbildung in Polyamid 6.6 nach Alterung bei 150°C bei Einsatz verschiedener erfindungsgemäßer Stabilisierungen und bei Vergleichsbeispielen:**

| Varianten | | Bewertung der Belagsbildung über einen Index: |
|---|---|---|
| | | 1 kein Belag; 5 sichtbarer dünner Belag, 10 starker Belag auf der gesamten Oberfläche |
| Vergleich | 0,3% H3386 | 1 |
| Vergleich | 2% Dipentaerythritol | 3 |
| Vergleich | 3% Dipentaerythritol | 6 |
| Vergleich | 2% Dipentaerythritol +0,3% H3386 | 7 |
| | | |
| Vergleich | 0,5% Naugard | 1 |
| Erfindung ohne Verwendung eines Vorkonzentrats | 2% Dipentaerythritol +0,5% Naugard 445 | 7 |
| Erfindung unter Verwendung eines Vorkonzentrats ohne Füllstoff | 4% VK 1 | 3 |
| Vergleich unter Verwendung eines Vorkonzentrats ohne Füllstoff | 4% VK 2 | 3 |
| Erfindung unter Verwendung eines Vorkonzentrats ohne Füllstoff | 4% VK 3 | 4 |
| Erfindung unter Verwendung eines Vorkonzentrats ohne Füllstoff | 4% VK 4 | 6 |
| Erfindung unter Verwendung eines Vorkonzentrats ohne Füllstoff | 4% VK 12 | 7 |
| Erfindung unter Verwendung eines Vorkonzentrats ohne Füllstoff | 4% VK 5 | 6 |
| Erfindung unter Verwendung eines Vorkonzentrats inklusive Füllstoff | 4% VK 6 | 4 |
| Erfindung unter Verwendung eines Vorkonzentrats und separate Zugabe eines Füllstoffs | 4% VK1 | 4 |
| | 0,5% Füllstoff C (separat, nicht mit dem Vorkonzentrat, zugegeben) | |
| Erfindung unter Verwendung eines Vorkonzentrats inklusive Füllstoff | 4% VK 7 | 3 |
| Erfindung unter Verwendung eines Vorkonzentrats inklusive Füllstoff | 4% VK 8 | 4 |
| Erfindung unter Verwendung eines Vorkonzentrats inklusive Füllstoff | 5% VK 9 | 2 |
| Erfindung unter Verwendung eines Vorkonzentrats inklusive Füllstoff | 4% VK 11 | 1 |
| Erfindung unter Verwendung eines Vorkonzentrats inklusive Füllstoff | 4% VK 10 | 1 |
| Erfindung unter Verwendung eines Vorkonzentrats inklusive Füllstoff | 4% VK 13 | 1 |
| Erfindung ohne Verwendung eines Vorkonzentrats | 35% Glasfaser | 1 |
| | +2% Dipentaerythritol | |
| | +0,5% Naugard 445 | |

Wie die Ergebnisse der Vergleichsvarianten in Tabelle 2a zeigen, neigen Polyole zur Migration und zum Ausblühen während der Wärmelagerung. Dieser Effekt wurde bei der Verwendung von sekundären aromatischen Aminen alleine oder bei Verwendung von Kupferkomplexbasierten Stabilisatoren alleine nicht beobachtet. Zwar führt die erfindungsgemäße Kombination von Polyolen und sekundären aromatischen Aminen zu einer deutlich verstärkten Migrationsneigung und zu signifikant stärkeren Bildung von Belägen auf dem Fertigteil (Index in Tabelle 2a nimmt von Bewertung 3 auf Bewertung 7 zu), jedoch ist die stabilisierende Wirkung sehr gut. Gleiches wurde analog bei der Kombination von Polyolen mit Kupferbasierten Stabilisatoren beobachtet. Das erfindungsgemäße Beispiel erhalten durch direkte Zugabe von Dipentaerythritol und Naugard 445 zeigt eine erhöhte Belagsbildung (Bewertung 7), ist aber im Hinblick auf die Wärmestabilisierung ausgezeichnet. Da derartige Belagbildungen ein ernstes Problem in vielen Anwendungsbereichen darstellen, zielt die vorliegende Erfindung auch darauf ab dieses Problem zu lösen. Es ist daher eine weitere entscheidende zusätzliche Aufgabe der Erfindung, diese verstärkte Migrationsneigung deutlich zur reduzieren, da die Praxistauglichkeit ansonsten stark eingeschränkt wäre. Es wurde festgestellt, dass sich durch den Einsatz eines geeigneten polymeren Vorkonzentrats die Migrationsneigung erfindungsgemäßer Additive in unverstärkten Polyamiden bei Warmlagerung deutlich reduzieren lässt. Wie die Ergebnisse in Tabelle 2a unter Verwendung eines Vorkonzentrates ohne Füllstoff zeigen, ist dabei die Auswahl des polymeren Trägers sehr wichtig für den Erfolg hinsichtlich Reduktion der Migrationsneigung. So wurde mit einem Ethylen-Acrylsäure-Copolymer keine Reduktion der Migrationsneigung erreicht, mit einem Ethylen-Butylacrylat-Copolymer eine leichte Reduktion der Migrationsneigung. Dagegen wurde bei der Verwendung von Ethylen-Methylacrylat-Copolymer ebenso wie bei der Verwendung von Ethylen-Vinaylacetat-Copolymer als Trägermaterial für das Vorkonzentrat eine deutliche Reduktion der Migrationsneigung erzielt.

Besonders effektiv und daher im Rahmen der Erfindung besonders bevorzugt ist daher das Verwenden eines Copolymers bestehend aus einem Olefin sowie einem Methylacrylat oder das Verwenden eines Copolymers bestehend aus einem Olefin und Vinylacetat. Eine weitere wichtige Maßnahme zur Minimierung der Belagsbildung ist der Einsatz von Füll- und Verstärkungsstoffen, wobei diese bevorzugt in das Vorkonzentrat eingearbeitet werden. Bevorzugt werden Glaskugeln oder Fasern, besonders bevorzugt Glasfasern oder Carbonfasern eingesetzt. Die Versuchsergebnisse der Varianten mit den Vorkonzentraten VK6, VK7, VK8, VK9, VK10, VK11 und VK13 belegen dies deutlich. Verwendet man kein Vorkonzentrat mit Füllstoff, so hat sich gezeigt, dass bei Zugabe zum zu modifizierenden Polyamid während der Compoundierung hohe Konzentrationen von Glasfasern (oder anderen Fasern oder Glaskugeln oder Füllstoffen) von typischerweise 20-40% eingesetzt werden müssen, um eine deutliche Reduktion der Belagsbildung zu erreichen. Die Konzentration sollte über 10% betragen um eine ausreichende Wirksamkeit zu erhalten. Überraschenderweise ist es jedoch deutlich effektiver im Hinblick auf die Reduktion der Belagsbildung, Glasfasern (oder Glaskugeln oder Carbonfasern etc.) direkt ins Vorkonzentrat einzuarbeiten. Dadurch kann auch schon bei niedrigen Glasfasergehalten von <5%, und selbst bei <2% jeweils bezogen auf das fertige Compound eine sehr gute Hemmung der Migrationsneigung und damit der Belagsbildung erreicht werden. Analog gilt dies auch beim Einsatz von Glaskugeln. Aufgrund der geringen bis sehr geringen Gehalte an Füll- und Verstärkungsstoffen können die fertigen Compounds selbst als im Prinzip unverstärkt eingeordnet werden. Eine weitere effektive Maßnahme zur Minimierung der Belagsbildung ist die Kombination von Glas- und Carbonfasern oder von Glasfasern und Glaskugeln im Vorkonzentrat. Die Belagsbildung kann so weiter minimiert werden, während der erforderliche Fasergehalt (z.B. <0,5% Carbonfasern und <1,0% Glasfasern) ebenfalls reduziert werden kann. Durch den geringen Gehalt an Fasern lassen sich die Fließeigenschaften so gestalten, dass beispielsweise Spritzguss sehr gut und mit hervorragenden Fließeigenschaften möglich ist. Dies zeigt, dass im Rahmen der vorliegenden Erfindung ein Baukasten zur Verfügung gestellt wird, der es ermöglicht unterschiedliche Anforderungen zielgerecht anzusteuern. Dabei sind sowohl die Auswahl des polymeren Trägermaterials, die Auswahl des Füllstoffs/Verstärkungsstoffs als auch die Konzentrationen der Komponenten im Vorkonzentrat wichtige Einflussfaktoren im Hinblick auf die zu erzielenden Ergebnisse, wie die aufgeführten Ergebnisse zeigen. Durch die geeignete Auswahl und Kombination von polymerem Trägermaterial und Füllstoff im Vorkonzentrat konnte die Belagsbildung während Wärmelagerung sogar völlig unterbunden werden. Somit konnte nicht nur die durch die Kombination von Polyolen mit weiteren Antioxidantien hervorgerufene zusätzliche Migrationsneigung zurückgedrängt werden, sondern die Migrationsneigung wurde so weitgehend unterbunden, dass deutlich bessere Ergebnisse (betreffend unterbleibender Belagsbildung) erzielt wurden, als bei der Verwendung von Polyolen alleine. Zusätzlich wurde gezeigt (wie auch die Ergebnisse in Tabelle 2b belegen), dass durch diese die Migration massiv reduzierenden Maßnahmen im Rahmen der vorliegenden Erfindung keine negativen Einflüsse auf die Anwendungseigenschaften der Fertigteile wie mechanische Kennwerte und Hitzestabilität entstehen.

Gleichzeitig wird durch die Versuche bestätigt, dass der Einsatz faserförmiger Verstärkungsmaterialien (wie Glasfasern) oder von Glaskugeln, in hohen Konzentrationen im Compound oder in niedrigen Konzentrationen im Compound, wenn die Fasern (oder Kugeln) dem Vorkonzentrat zugegeben werden, unerwartet die Migrationsneigung der Additive, insbesondere der Polyolkomponente, verringert, während dieser Effekt mit anderen Partikel förmigen Verstärkungsmaterialien nicht in gleichem Maße erreicht werden kann. Durch die Verringerung oder vollständige Verhinderung der Migration der Polyolkomponente kann darüber hinaus auch die Einsatzmenge an Polyolkomponente verringert werden (da keine oder zumindest nur noch sehr geringe Anteile durch Migration verloren gehen), ohne dass eine Beeinträchtigung der Stabilisierung erfolgt. Dies wiederum führt zu einer weiter verringerten Migration an die Oberfläche (da weniger Polyolkomponente im Compound vorliegt). So können ausgezeichnete Eigenschaftsprofile erreicht werden.

**Tabelle 2b: Stabilisierung von Polyamid 6.6 unverstärkt v.a. mit erfindungsgemäßen Additiven in Form von Vorkonzentraten; Wärmealterung bei 150°C**

| Varianten | | Halbwertszeit der Zugfestigkeit nach Hitzealterung bei 150°C | Scheinbare Viskosität [Pas] bei Schergeschwindigkeit 1000s⁻¹ (ungealtert) |
|---|---|---|---|
| Erfindung | 1,6% Dipentaerythritol +0,65% Naugard 445 | 2.500h | 50 |
| **Erfindung** | **4% VK 1** | **2.600h** | **50** |
| **Erfindung** | **4% VK 7** | **2.700h** | **50** |
| **Erfindung** | **4% VK 8** | **2.700h** | **55** |
| **Erfindung** | **5% VK 9** | **2.800h** | **50** |

Die hier dargestellten Ergebnisse der Hitzealterung bei 150°C zeigen, dass bei der Verwendung polymerer Vorkonzentrate (unter anderem auch unter zusätzlichem Einsatz von Füllstoffen) die analoge Hitzestabilisierung erreicht wird, wie bei direktem Einsatz der einzelnen stabilisierenden Komponenten in der Compoundierung. D.h. die Belagsbildung bei Hitzealterung kann wie oben beschrieben mit Hilfe der Verwendung von Füllstoffen im Vorkonzentrat massiv eingedämmt werden, ohne dass dadurch eine Einbuße bei der Stabilisierungseffizienz auftritt.

Mittels HKR (Hochdruckkapillar-Viskosimeter) wurde die Fließfähigkeit der Varianten bestimmt. Die Ergebnisse zeigen, dass die für den Spritzgussprozess relevante scheinbare Viskosität (bei Schergeschwindigkeit 1000s⁻¹) und damit die Fließfähigkeit der resultierenden Polyamidwerkstoffe selbst durch die Zugabe von Fasern oder anderen Füllstoffen im Vorkonzentrat (VK9 enthält 30% Glasfasern) auf gleichem Niveau bleibt und nicht verschlechtert wird im Vergleich zu Varianten ohne Zugabe von Füllstoffen. Die Verwendbarkeit auch der Vorkonzentrate mit Verstärkungsstoffen, wie Glasfasern oder Carbonfasern, ist also für die Verarbeitung der daraus resultierenden Polyamidwerkstoffe in Spritzguss und Extrusion sehr gut.

### Beispiel 3

Die in der Tabelle 3 genannten Additive wurden mit PA 6.6 compoundiert und die Zeit bestimmt, bis die Zugfestigkeit auf 90% des Anfangswerts abfällt.

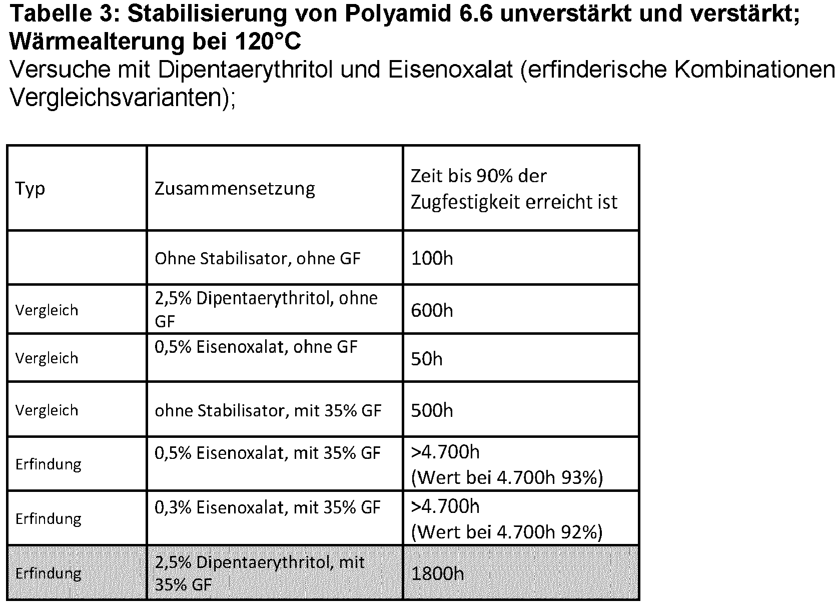

Bei vergleichsweise niedrigeren Temperaturen wie hier 120°C, zeigen Polyalkohole ebenso wie Eisenoxalat alleine in Polyamiden nur eine geringe Wirkung auf die Werkstofflebenszeit. Gleiches gilt, wenn alleine Glasfasern oder alleine Füllstoffe eingesetzt werden. Überraschenderweise wird durch ein Verfahren mit geeigneter Kombination von Polyolen oder Eisenverbindungen und Glasfasern auch bei Temperaturen im Bereich von 100 bis 170°C eine deutlich synergistische Wirkung und eine signifikante Verbesserung der Langzeitstabilität erreicht, und dies überraschenderweise ohne vorgelagerten "Versiegelungsschritt". In diesem Zusammenhang hat es sich weiterhin gezeigt, dass durch den Einsatz der Polyolkomponente eine Verbesserung der Fließeigenschaften auftritt, selbst bei Einsatz von Glasfasern oder Glaskugeln im Vorkonzentrat (zur Verhinderung der Migration im fertigen Werkstück), so dass auch im Hinblick auf die Verarbeitung/Formgebung durch den Einsatz von Fasern oder Kugeln im Vorkonzentrat (was zu einem gewissen Anteil an Fasern oder Kugeln im Compound führt) keine Nachteile zu beobachten sind.

### Beispiel 4

Die in der Tabelle 4 genannten Additive wurden mit PA 6.6 compoundiert und die Zeit bestimmt, bis die Zugfestigkeit nach Wärmealterung auf 90% des Anfangswerts abfällt.

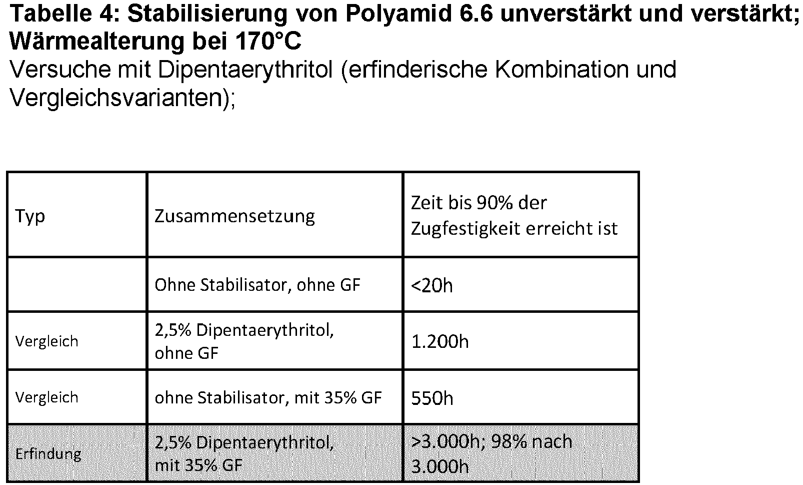

Bei der Erhöhung der Lagerungstemperatur von 120°C wie in Beispiel 3 auf 170°C in Beispiel 4 zeigt sich, dass bei der Verwendung von Dipentaerythritol alleine in unverstärktem Polyamid eine längere Lebenszeit des Polyamid-Werkstoffes vorliegt, im Vergleich zu der niedrigeren Temperatur von 120°C. Dieses Verhalten unterscheidet sich fundamental von der Wirkung der bekannten Antioxidantien, bei denen gemäß Lehrbuch die Arrhenius-Gleichung gültig ist und somit die logarithmischen Werte der Retentionszeiten linear mit der reziproken Temperatur (1/T) abfallen. Dieses Prinzip wird für Schnellalterungstests verwendet, um die Lebenszeit bei niedrigeren Temperaturen aus Daten bei hohen Temperaturen vorherzusagen. Die Tabellen 3 und 4 zeigen jedoch, dass Polyole umso weniger wirksam sind, je niedriger die Alterungstemperatur ist. Erst bei sehr hohen Temperaturen wird (gemäß gängiger Lehrmeinung über die Ausbildung einer "Schutzschicht") eine deutlich verbesserte Wirkung hinsichtlich der Langzeitstabilität des Werkstoffes erreicht. Das Prinzip der Schnellalterungstests ist bei mit Polyolen versehenen Werkstoffen somit nicht anwendbar.

Überraschenderweise wird aber die gewünschte Langzeitstabilität der Polyamidwerkstoffe auch bei höheren Temperaturen im Bereich von 100 bis 170°C erreicht, wenn anstatt einer höheren Alterungstemperatur (zur Ausbildung der Schutzschicht) ein Verfahren eingesetzt wird, bei dem bei der Compound-Herstellung gleichzeitig mit dem Polyol Glasfasern und / oder Füllstoffe in der Schmelze zugemischt werden (s. Tabelle 4). Dies ist umso überraschender, da Glasfasern oder andere Füllstoffe alleine zwar einen positiven Effekt auf die Langzeitstabilität der Werkstoffe haben, dieser aber vergleichsweise gering ausgeprägt ist und meist alleine nicht ausreicht, um den hohen Anforderungen hinsichtlich Metallersatz in der Praxis, vor allem im Automobilbereich, gerecht zu werden.

### Beispiel 5

Die in der Tabelle 5 genannten Additive wurden mit PA 6.6 compoundiert und die Zugfestigkeit (in Relation zum Ausgangswert nach Compoundherstellung) nach Lagerung bei 150°C für 2000 h bestimmt.

**Tabelle 5: Stabilisierung von Polyamid 6.6 verstärkt: Wärmealterung bei 150°C**

| Typ | Zusammensetzung | Zugfestigkeit nach 2000h | Zugfestigkeit nach 5000h |
|---|---|---|---|
| Vergleich | Ohne Stabilisator mit 35% Füllstoff A | 50% | 15% |
| **Erfindung** | **2,5% Dipentaerythritol mit 35% Füllstoff** A | **75%** | **73%** |
| **Vergleich** | **Ohne Stabilisator mit 35% Glasfaser** | **85%** | **70%** |
| **Erfindung** | **2,5% Dipentaerythritol mit 35% Glasfaser** | **90%** | **90%** |

Tabelle 5 zeigt, dass auch beim Einsatz eines Füllstoffs in Partikelform (also keine Faserform) eine deutliche Verbesserung der Hitzestabilität erhalten werden kann, da erneut die Polyolkomponente mit der Verstärkungskomponente eine unerwartete synergistische Wirkung zeigt. Diese synergistische Wirkung ist jedoch bei der Verwendung von Glasfasern deutlich stärker ausgeprägt und zeigt sich noch deutlicher bei längerer Lagerungszeit. Wesentlich ist hier insbesondere, dass erfindungsgemäß die Zugfestigkeitswerte über einen langen Zeitraum auf hohem Niveau galten werden, während nur mit Füllstoff aber auch nur mit Glasfasern eine deutliche Verringerung eintritt, insbesondere bei sehr langen Wärmealterungszeiten (die eher repräsentativ für die tatsächlichen Anforderungen bei der Verwendung sind).

### Beispiel 6

Die in der Tabelle 6 genannten Additive wurden mit PA 6.6 compoundiert und die Zeit bestimmt bei der die Zugfestigkeit auf 90% des Anfangswerts abfällt.

**Tabelle 6: Stabilisierung von Polyamid 6.6 verstärkt (35% Glasfasergehalt); Wärmealterung bei 200°C Vergleichsversuche mit Dipentaerythritol und verschiedenen Antioxidantien**

| Zusammensetzung | Zeit bis 90% der Anfangszugfestigkeit erreicht ist |
|---|---|
| ohne Stabilisator | 150h |
| 1,0% Dipentaerythritol | 670h |
| 1,75% Dipentaerythritol | 1.100h |
| 2,5% Dipentaerythritol | 1.600h |
| 0,7% Naugard 445 | 150h |
| 2,5% Dipentaerythritol und 0,7% Naugard 445 | 1.600h |
| 0,7% der Mischung (70% Irganox 1098; 30% Irgaphos 168) | 150h |
| 2,5% Dipentaerythritol und 0,7% der Mischung (70% Irganox 1098; 30% Irgaphos 168) | 1.600h |
| 0,3% H324 | 250h |
| 2,5% Dipentaerythritol und 0,3% H324 | 1.600h |

Bei hohen Temperaturen über 170°C, insbesondere bei Temperaturen über 190°C zeigen die für Polyamide typischen Stabilisatoren mit Ausnahme von Kupferstabilisatoren keine Wirkung. Selbst bei Kupferbasierten Antioxidantien ist die Wirkung bei Temperaturen von 200°C und darüber nur sehr gering ausgeprägt. Bei Polyamidzusammensetzungen unter gleichzeitiger Verwendung eines Polyalkohols wird bei diesen sehr hohen Temperaturen deutlich, dass für die Wirkung der Polyalkohol maßgeblich ist. Zusätze weiterer Stabilisatoren führen nicht zu einer Verlängerung der Stabilisierungsszeiten.

Die Bedeutung von zusätzlichen Stabilisatoren auf Basis phenolischer, aminischer oder Kupferbasierter Antioxidantien für die Langzeitstabilität ist bei Temperaturen von 200°C also vernachlässigbar gering. Dies steht im Gegensatz zu der erfindungsgemäß erreichten Stabilisierung bei niedrigeren Temperaturen (siehe Tabelle 1), wo die Kombination mit derartigen weiteren Stabilisatoren einen überraschenden und deutlichen Effekt auf die Langzeitstabilität von unverstärkten Polyamid-Werkstoffen im Temperaturbereich von 100 bis 170°C zeigt. Diese Versuche belegen also, dass die erfindungsgemäß erreichbare Stabilisierung den Erwartungen des Fachmanns zuwiderläuft. Es war also für den Fachmann nicht zu erwarten, dass die im erfindungsgemäßen Temperaturbereich erreichte Langzeitstabilisierung tatsächlich realisiert werden könnte.

### Beispiel 7

Die in der Tabelle 7 genannten Additive wurden mit PA 6.6 compoundiert und die Zeit bestimmt, bis die Zugfestigkeit auf 90% des Anfangswerts abfällt.

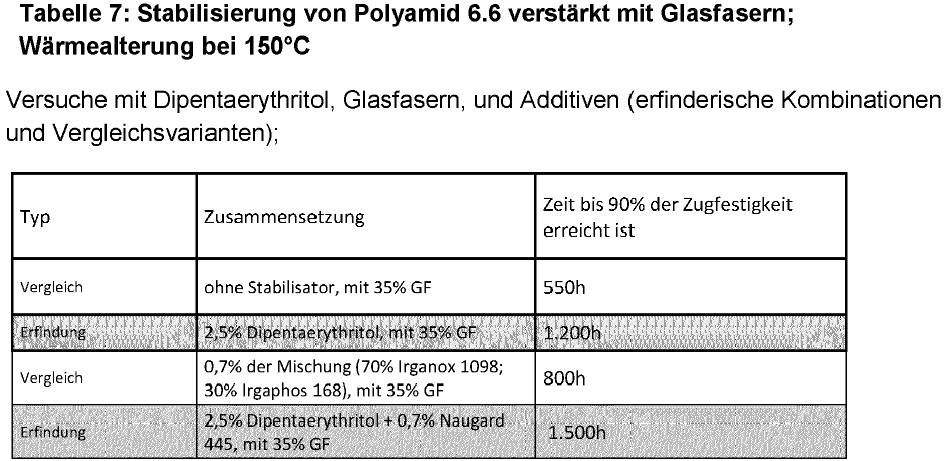

Die Ergebnisse aus Tabelle 7 demonstrieren, dass entgegen der im Stand der Technik postulierten Erwartung, dass eine Hochtemperaturversiegelung bei Polyolbasierten Stabilisatorsystemen notwendig ist, um eine nennenswerte Verbesserung der Stabilisierung zu erreichen, ohne Hochtemperaturversiegelung bei hohen Temperaturen wie z.B. 200°C das System Polyol/GF eine deutlich verbesserte Stabilität bei einer Lagertemperatur von 150°C zeigt. Auch die erfindungsgemäße Kombination Polyol/GF/sek.aromatisches Amin zeigt eine ausgezeichnete Stabilisierung bei 150°C.

Damit wird deutlich, dass lediglich die besonderen erfindungsgemäßen Kombinationen eine Eignung zur Langzeitstabilisierung von Polyamiden im Temperaturbereich von 100 bis 170°C zeigen, bei gleichzeitigem Verzicht auf Kupferbasierte Stabilisatoren und ionische Stabilisatorkomponenten (wie Kupfer- und Halogensalze).

**Tabelle 8: CTI-Werte**

| Es wurden aus den in Tabelle 8 beschriebenen Zusammensetzungen Prüfplättchen von 3x5 cm und 3 mm Dicke auf der Spritzgießmaschine hergestellt und die die für Elektroanwendungen besonders relevanten CTI-Werte gemäß der Norm IEC-60112 gemessen. | | |
|---|---|---|
| Typ | Zusammensetzung | CTI-Wert |
| Vergleich | Ohne Stabilisator | 600V |
| Vergleich | 3% Dipentaerythritol | 600V |
| Vergleich | 0,4% H324 | 475V |
| Vergleich | 0,7% Naugard 445 | 600V |
| Vergleich | 0,7% der Mischung (70% Irganox 1098; 30% Irgaphos 168) | 600V |
| Erfindung | 3% Dipentaerythritol + 0,7% Naugard 445 | 600V |
| Erfindung | 3% Dipentaerythritol + 0,7% der Mischung (70% Irganox 1098; 30% Irgaphos 168) | 600V |

Die Ergebnisse aus Tabelle 8 zeigen, dass zusätzlich zu den verbesserten Wärmeeigenschaften der Einfluss auf die elektrischen Eigenschaften, insbesondere die Kriechstromfestigkeit, gering bleibt. Dies ermöglicht weiterhin den Einsatz von solchen Stabilisatoren im E&E- Bereich, bei dem neben erhöhter Wärmeformbeständigkeit auch hohe CTI Werte gefordert werden. Ebenfalls sollte die in vielen Fällen kritische Korrosionswirkung verschiedener Stabilisatoren durch die erfindungsgemäße Komposition nicht negativ beeinflusst werden.

## Patentansprüche

1. Verfahren zur Stabilisierung von Polyamiden bei Temperaturen von 100°C bis 170°C, insbesondere 150°C, **dadurch gekennzeichnet, dass** ein Polyamid mit einer Polyolverbindung und einem Halogen- und Kupferfreien Antioxidationsmittel vermischt wird.

2. Verfahren zur Stabilisierung von Polyamiden bei Temperaturen von 100°C bis 170°C, insbesondere 150°C, **dadurch gekennzeichnet, dass** ein Polyamid mit einer Polyolverbindung oder einer Eisenverbindung und einem Verstärkungsstoff vermischt wird.

3. Verwendung einer Polyolverbindung und eines Halogen- und Kupferfreien Antioxidationsmittels zur Stabilisierung von Polyamiden bei Temperaturen von 100°C bis 170°C, insbesondere 150°C.

4. Verwendung einer Polyolverbindung oder einer Eisenverbindung und einem Verstärkungsstoff zur Stabilisierung von Polyamiden bei Temperaturen von 100°C bis 170°C, insbesondere 150°C.

5. Verfahren nach Anspruch 1 oder 2 oder Verwendung nach Anspruch 3 oder 4, **dadurch gekennzeichnet, dass** die Polyolverbindung ein Polyol mit 2 oder mehr Hydroxylgruppen ist, bevorzugt ein Polyol mit 2 bis 12 Hydroxylgruppen und einem Molekulargewicht von 64 bis 2000 g/mol, besonders bevorzugt Pentaerythritol, Dipentaerythritol und Tripentaerythritol, insbesondere Dipentaerythritol.

6. Verfahren nach einem der Ansprüche 1 oder 5 oder Verwendung nach Anspruch 3, wobei zusätzlich ein Verstärkungsstoff eingemischt wird.

7. Verfahren oder Verwendung nach einem der Ansprüche 2, 4 oder 5, wobei zusätzlich ein Halogen- und Kupferfreies Antioxidationsmittel verwendet wird.

8. Verfahren oder Verwendung nach Anspruch 7, wobei das Halogen- und Kupferfreie Antioxidationsmittel ausgewählt ist unter sekundären aromatischen Aminen oder Alkyl-Aryl substituierten Aminen oder sterisch gehinderten Phenolen, letztere üblicherweise in Kombination mit sekundären Antioxidantien, vor allem Phosphiten oder Phosphonaten.

9. Verfahren oder Verwendung nach einem der vorstehenden Ansprüche, wobei der Verstärkungsstoff ausgewählt ist unter Glas- oder Kohlefasern oder Glaskugeln oder anderen Füllstoffen, einschließlich nanoskaligen Füllstoffen.

10. Verfahren oder Verwendung nach einem der vorstehenden Ansprüche, wobei zusätzlich eine Kupferverbindung und/oder ein Halogenhaltiger Synergist eingesetzt wird.

11. Verfahren oder Verwendung nach Anspruch 10, wobei die Kupferverbindung ein Kupfer(I)salz, ein Kupfer(II)salz oder ein Kupferkomplex ist, bevorzugt wobei das Kupfer(I)salz ausgewählt ist aus Cul, CuBr, CuCl, CuCN, Cu₂O oder Gemischen daraus und/oder wobei dass das Kupfer(II)Salz ausgewählt ist aus Kupferacetat, Kupferstearat, Kupfersulfat, Kupferpropionat, Kupferbutyrat, Kupferlactat, Kupferbenzoat, Kupfernitrat, CuO, CuCl₂ oder Gemischen daraus und/oder der Kupferkomplex ausgewählt ist aus Kupferacetylacetonat, Kupferoxalat, Kupfer-EDTA, [Cu(PPh₃)₃X], [Cu₂X₂(PPH₃)₃], [Cu(PPh₃)X], [Cu(PPh₃)₂X], [CuX(PPh₃)(bipy)], [CuX(PPh₃)(biquin)] wobei X=CI, Br, I, CN, SCN oder 2-Mercaptobenzimidazol ist.

12. Verfahren oder Verwendung nach Anspruch 10, wobei der Halogenhaltige Synergist ein halogenhaltiges, vorzugsweise bromhaltiges Poylmer ist, vorzugsweise ein Polymer mit aromatischen Gruppen, insbesondere bromierte Styrol enthaltende Polymere.

13. Verfahren oder Verwendung nach einem der vorstehenden Ansprüche 1 bis 12, **dadurch gekennzeichnet, dass** das Polyamid ein aliphatisches oder teilaromatisches Polyamid ist, optional jeweils schlagzäh modifiziert, vorzugsweise ausgewählt ist aus PA 6, PA 6.6, PA 4.6, PA 11, PA 12 oder Gemischen daraus.

14. Verfahren oder Verwendung nach einem der Ansprüche 1 bis 13, wobei die Polyolverbindung oder die Polyolverbindung zusammen mit einem Halogen- und Kupferfreien Antioxidationsmittel oder die Polyolverbindung zusammen mit einem Halogen- und Kupferfreien Antioxidationsmittel sowie mit einem weiteren Antioxidationsmittel in Form eines Vorkonzentrats in einem polymeren oder nicht polymeren Träger eingesetzt wird.

15. Verfahren oder Verwendung nach Anspruch 14, wobei das Vorkonzentrat zusätzlich Glaskugeln oder faserförmige Verstärkungsstoffe oder andere Füllstoffe, bevorzugt Glasfasern oder/und Glaskugeln enthält und/oder das Trägermaterial für das Vorkonzentrat ein Polymer ist, ausgewählt unter Polymeren oder Copolymeren aus den Monomeren Ethylen, Propylen oder anderen Olefinen, Methacrylsäure, Vinylacetat, Acrylsäure, Acrylsäureestern, oder Methacrylsäureestern, besonders bevorzugt Ethylen-Vinylacetat-Copolymer (EVA) oder ein Olefin-Acrylsäureester-Copolymer oder ein Olefin-Methacrylsäureester-Copolymer, insbesondere ein Ethylen-Methylacrylat-Copolymer (EMA), ein Ethylen-Ethylacrylat-Copolymer (EEA) oder ein Ethylen-Butylacrylat-Copolymer (EBA), besonders bevorzugt ein Ethylen-Methylacrylat-Copolymer (EMA) oder ein Ethylen-Vinylacetat-Copolymer (EVA).

16. Polyamid-Werkstoff, erhältlich nach einem Verfahren nach einem der vorstehenden Ansprüche oder unter Einsatz der Verwendung nach einem der vorstehenden Ansprüche.
